(19)

Europäisches
Patentamt
European
Patent Office
Office européen
des brevets

(11) **EP 2 988 519 A1**

(12) **EUROPEAN PATENT APPLICATION**
published in accordance with Art. 153(4) EPC

(43) Date of publication:
**24.02.2016 Bulletin 2016/08**

(21) Application number: **14784953.3**

(22) Date of filing: **15.04.2014**

(51) Int Cl.:
**H04N 21/43** *(2011.01)*　　　**H04N 21/40** *(2011.01)*

(86) International application number:
**PCT/KR2014/003272**

(87) International publication number:
**WO 2014/171718 (23.10.2014 Gazette 2014/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.04.2013 US 201361812713 P**

(71) Applicant: **LG Electronics Inc.**
**Seoul 07336 (KR)**

(72) Inventors:
- **OH, Sejin**
  **Seoul 137-893 (KR)**
- **PARK, Jungwook**
  **Seoul 137-893 (KR)**
- **MOON, Kyoungsoo**
  **Seoul 137-893 (KR)**
- **KWON, Woosuk**
  **Seoul 137-893 (KR)**

(74) Representative: **Cabinet Plasseraud**
**66, rue de la Chaussée d'Antin**
**75440 Paris Cedex 09 (FR)**

(54) **BROADCASTING TRANSMISSION DEVICE, BROADCASTING RECEPTION DEVICE, OPERATING METHOD OF BROADCASTING TRANSMISSION DEVICE AND OPERATING METHOD OF BROADCASTING RECEPTION DEVICE**

(57)　　Disclosed is a method for operating a broadcast receiving device. A broadcast receiving unit receives a first broadcast stream including broadcast content via a broadcasting network other than an IP network. An IP transmitting/receiving unit receives media content transmitted via the IP network. A control unit receives media content presentation information for the media content on the basis of the first broadcast stream, and presents the media content on the basis of the media content presentation information.

【Figure 31】

**Description**

## TECHNICAL FIELD

The present disclosure relates to a broadcast transmitting device, a broadcast receiving device, a method for operating the broadcast transmitting device, and a method for operating the broadcast receiving device.

## BACKGROUND ART

As the Internet is widely used, media services for providing content using an Internet Protocol as a main transmission network are actively provided. With this trend, MPEG-Dynamic Adaptive Streaming over HTTP (DASH) that is a standard technology for adaptively transmitting media content according to a network environment and MEPG Media Transport (MMT) that is a transmission standard for efficiently transmitting media content via an IP network have been developed.

However, most media content is still transmitted via typical digital broadcasting networks based on satellites, cables, terrestrial networks, or the like. Therefore, many users use satellite, cable or terrestrial broadcast receiving devices. Therefore, it is necessary to develop a broadcast transmitting device, a broadcast receiving device, a method for operating the broadcast transmitting device, and a method for operating the broadcast receiving device for enabling such satellite, cable or terrestrial broadcast receiving devices to access media content transmitted via an IP network.

In particular, a broadcast transmitting device, a broadcast receiving device, a method for operating the broadcast transmitting device, and a method for operating the broadcast receiving device which are compatible with technical standards such as MPEG-DASH and MMT are required.

## DISCLOSURE OF THE INVENTION TECHNICAL PROBLEM

Embodiments provide a broadcast transmitting device, a broadcast receiving device, a method for operating the broadcast transmitting device, and a method for operating the broadcast receiving device for receiving, via a broadcasting network other than an IP network, media content presentation information including information on media content transmitted via the IP network.

Embodiments also provide a broadcast transmitting device, a broadcast receiving device, a method for operating the broadcast transmitting device, and a method for operating the broadcast receiving device for synchronizing media content transmitted via an IP network with media content transmitted via a broadcasting network other than the IP network.

Embodiments also provide a broadcast transmitting device, a broadcast receiving device, a method for operating the broadcast transmitting device, and a method for operating the broadcast receiving device for providing information on media content transmitted via a broadcasting network other than an IP network using media content presentation information including information on media content transmitted via the IP network.

## TECHNICAL SOLUTION

In one embodiment, a method for operating a broadcast receiving device includes: receiving a first broadcast stream including broadcast content via a broadcasting network other than an IP network; receiving media content presentation information for media content transmitted via the IP network on the basis of the first broadcast stream; receiving the media content; and presenting the media content on the basis of the media content presentation information.

The first broadcast stream may include a broadcast information signaling table including information on the broadcast content, wherein the broadcast information signaling table may include a first element indicating a transmission method of the media content presentation information and a second element indicating transmission information corresponding to the transmission method, wherein the receiving the media content presentation information may include receiving the media content presentation information on the basis of the first element and the second element.

The broadcast information signaling table may be one of a program map table (PMT), a service map table (SMT), and a terrestrial virtual channel table (TVCT).

The first element may indicate that the media content presentation information is transmitted on a second broadcast stream different from the first broadcast stream, wherein the second element may include an identifier of the second broadcast stream.

The first element may indicate that the media content presentation information is transmitted by a session-based transport protocol, wherein the second element may include an identifier of a session of the session-based transport protocol.

The first element may indicate that the media content presentation information is added to an information table in the first broadcast stream so as to be transmitted, wherein the second element may include an identifier of a packet including the information table.

The first element may indicate that the media content presentation information is added to an Internet protocol (IP) datagram in the first broadcast stream so as to be transmitted, wherein the second element may include an identifier of a data transmission channel of a physical layer for transmitting the IP datagram and a port number and an IP address of the IP datagram.

The method may include extracting, from the broadcast stream, synchronization information for synchronizing the broadcast content with the media content, wherein the presenting the media content may include synchronizing the media content with the broadcast content on the basis of the synchronization information.

The synchronization information may include a first element indicating an own presentation time of the media content and a second element indicating an identifier of a presentation interval of the media content.

The synchronization information may include a third element indicating a remaining time from a broadcast stream reference time of the packet including the synchronization information to a start time of the presentation interval of the media content to be synchronized.

The synchronization information may include a fourth element indicating whether the media content presentation information is required to be updated prior to synchronization, wherein the synchronizing the media content with the broadcast content may include updating the presentation information on the basis of a value of the fourth element.

The synchronization information may be added to a header of a packet including a video or an audio included in the broadcast content.

In another embodiment, a broadcast receiving device includes: a broadcast receiving unit configured to receive a first broadcast stream including broadcast content via a broadcasting network other than an IP network; an IP transmitting/receiving unit configured to receive media content transmitted via the IP network; and a control unit configured to receive media content presentation information for the media content on the basis of the first broadcast stream, and present the media content on the basis of the media content presentation information.

In further another embodiment, a method for operating a broadcast transmitting device includes: inserting broadcast content into a broadcast stream; inserting, into the broadcast stream, media content presentation information for media content transmitted via an IP network; and transmitting the broadcast stream via a broadcasting network other than an Internet protocol (IP) network.

## ADVANTAGEOUS EFFECTS

One embodiment provides a broadcast transmitting device, a broadcast receiving device, a method for operating the broadcast transmitting device, and a method for operating the broadcast receiving device for receiving media content presentation information including information on media content transmitted via an IP network.

Another embodiment provides a broadcast transmitting device, a broadcast receiving device, a method for operating the broadcast transmitting device, and a method for operating the broadcast receiving device for synchronizing media content transmitted via an IP network with media content transmitted via a broadcasting network other than the IP network.

Another embodiment provides a broadcast transmitting device, a broadcast receiving device, a method for operating the broadcast transmitting device, and a method for operating the broadcast receiving device for providing information on media content transmitted via a broadcasting network other than an IP network using media content presentation information including information on media content transmitted via the IP network.

## BRIEF DESCRIPTION OF THE DRAWINGS

Fig. 1 is a block diagram illustrating a media content transmitting/receiving system according to an embodiment.
Fig. 2 is a diagram illustrating a system for transmitting/receiving media content via an IP network according to an embodiment.
Fig. 3 illustrates a structure of a media presentation description (MPD) according to an embodiment.
Fig. 4 illustrates an XML syntax of the MPD according to an embodiment.
Fig. 5 illustrates an XML syntax of a period element of the MPD according to an embodiment.
Fig. 6 is a flowchart illustrating an operation of receiving, by a broadcast receiving device, media content via an IP network according to an embodiment.
Fig. 7 illustrates a bitstream syntax for the case where the MPD is transmitted in a format of an MPD information table.
Fig. 8 is a flowchart illustrating an operation of extracting, by the broadcast receiving device, the MPD on the basis of an information table including the MPD according to an embodiment.
Fig. 9 illustrates an MPD link table including an MPD link according to an embodiment.

Fig. 10 is a flowchart illustrating an operation of receiving, by the broadcast receiving device, the MPD on the basis of a media content presentation information table including a media content presentation information link according to an embodiment.

Fig. 11 illustrates that the MPD or the MPD information table is added to an IP datagram so as to be transmitted according to an embodiment.

Fig. 12 illustrates a syntax of the IP datagram for the case where the MPD or the MPD information table is added to the IP datagram so as to be transmitted according to an embodiment.

Fig. 13 illustrates a syntax of an MPD payload included in the IP datagram for the case where the MPD or the MPD information table is added to the IP datagram so as to be transmitted according to an embodiment.

Fig. 14 is a flowchart illustrating an operation of extracting, by the broadcast receiving device, the media content presentation information or the media content presentation information table on the basis of the IP datagram including the media content presentation information or the media content presentation information table according to an embodiment.

Fig. 15 illustrates a syntax of an MPD descriptor for transmitting the MPD according to an embodiment.

Fig. 16 illustrates a syntax of MPD bootstrap_data in the case where the MPD descriptor directly includes the MPD.

Fig. 17 illustrates a syntax of MPD bootstrap_data in the case where the MPD descriptor includes a link to the MPD.

Fig. 18 illustrates the syntax of the MPD bootstrap_data in the case where the MPD descriptor includes an identifier of a data packet including the MPD.

Fig. 19 illustrates the syntax of the MPD bootstrap_data in the case where the MPD descriptor includes an identifier of an additional broadcast stream including the MPD.

Fig. 20 illustrates the syntax of the MPD bootstrap_data in the case where the MPD descriptor includes information on an IP datagram including the MPD.

Fig. 21 illustrates the syntax of the MPD bootstrap_data in the case where the MPD descriptor includes information on a session of a session-based transport protocol for transmitting the MPD.

Fig. 22 is a flowchart illustrating an operation of receiving, by the broadcast receiving device, the media content presentation information in the case where a method of transmitting the media content presentation information is added to a broadcast information signaling information table so as to be transmitted.

Fig. 23 is a flowchart illustrating an operation of presenting, by the broadcast receiving device, media content on the basis of whether transmission of a broadcast stream is stable in the case where broadcast content is transmitted via not only a broadcasting network but also an IP network.

Fig. 24 illustrates a syntax of a broadcast stream packet including synchronization information of media content transmitted via an IP network according to an MPEG-DASH standard.

Fig. 25 illustrates a syntax of the synchronization information added to a header of a packet including broadcast content such as a video or an audio according to an embodiment.

Fig. 26 illustrates the syntax of the synchronization information added to the header of a packet including broadcast content such as a video or an audio according to another embodiment.

Fig. 27 is a flowchart illustrating an operation of synchronizing, by the broadcast receiving device, broadcast content with media content according to an embodiment.

Fig. 28 illustrates a format of information for identifying broadcast content included in the media content presentation information in the case where the broadcast content is transmitted according to an ATSC standard.

Fig. 29 illustrates an example of the MPD of MPEG-DASH including information for identifying broadcast content transmitted according to the ATSC standard.

Fig. 30 is a flowchart illustrating an operation of receiving, by the broadcast receiving device, broadcast content on the basis of the media content presentation information.

Fig. 31 is a block diagram illustrating that the broadcast receiving device receives the MPD of MPEG-DASH via a broadcasting network for transmitting a broadcast stream according to an MPEG-2 TS standard.

Fig. 32 is a block diagram illustrating that the broadcast receiving device synchronizes broadcast content of a broadcast stream transmitted according to the MPEG-2 TS standard with media content transmitted via an IP network.

## MODE FOR CARRYING OUT THE INVENTION

Embodiments of the present disclosure are described below in detail with reference to the accompanying drawings so that the embodiments are easily carried out by those skilled in the art. However, the embodiments of the present disclosure may be implemented in various different forms and are not limited to the examples described herein. Some parts of the embodiments, which are not related to the description, are not illustrated in the drawings in order to clearly describe the embodiments of the present disclosure. Like reference numerals refer to like elements throughout the description.

When it is mentioned that a certain part "includes" or "comprises" certain elements, the part may further include other elements, unless otherwise specified.

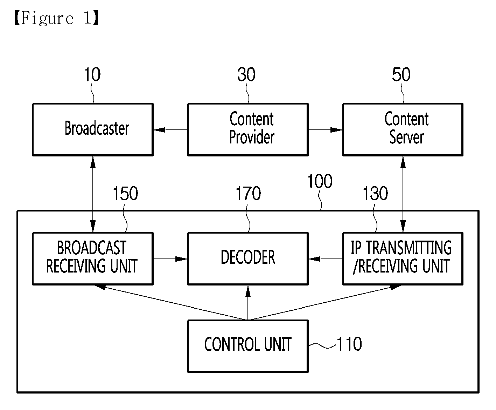

Fig. 1 is a block diagram illustrating a media content transmitting/receiving system according to an embodiment.

The media content transmitting/receiving system includes a broadcaster 10, a content provider 30, a content server 50, and a broadcast receiving device 100.

The content provider 30 provides media content to the broadcaster and the content server 50.

The broadcaster 10 transmits a broadcast stream including media content using at least one of a satellite, terrestrial or cable broadcasting network.

The content server 50 transmits media content on the basis of a request of the broadcast receiving device.

The broadcast receiving device 100 includes a control unit 110, an IP transmitting/receiving unit 130, a broadcast receiving unit 150, and a decoder 170. The broadcast receiving device 100 controls operation of the IP transmitting/receiving unit 130, the broadcast receiving unit 150, and the decoder 170 via the control unit 110. The broadcast receiving device 100 receives a broadcast stream including media content via the broadcast receiving unit 150. Here, the broadcast stream may be transmitted using at least one of a satellite, terrestrial or cable broadcasting network. Therefore, the broadcast receiving unit 150 may include at least one of a satellite tuner, a terrestrial tuner, or a cable tuner to receive the broadcast stream. The broadcast receiving device 100 requests media content from the content server 50 via the IP transmitting/receiving unit 130. The broadcast receiving device 100 receives the media content from the content server 50 via the IP transmitting/receiving unit 130. The broadcast receiving device 100 decodes the media content via the decoder 170.

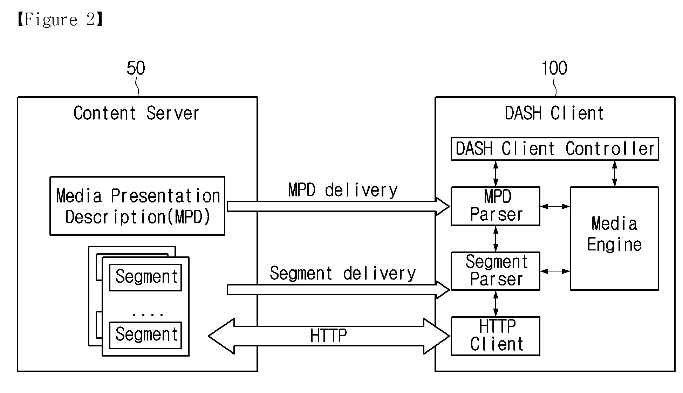

Media content transmission/reception via an IP network according to an embodiment will be described with reference to Figs. 2 to 6.

Fig. 2 is a diagram illustrating a system for transmitting/receiving media content via an IP network according to an embodiment.

The media content transmission/reception via an IP network according to an embodiment is divided into transmission/reception of a transmission packet including actual media content and transmission/reception of media content presentation information. The broadcast receiving device 100 receives the media content presentation information, and receives the transmission packet including media content. The media content presentation information represents information required for presenting the media content. The media content presentation information includes at least one of spatial information or temporal information required for presenting the media content. The broadcast receiving device 100 presents the media content on the basis of the media content presentation information.

In a specific embodiment, media content may be transmitted/received via an IP network according to an MPEG Media Transport (MMT) standard. The content server 50 transmits a presentation information (PI) document including the media content presentation information. Furthermore, the content server 50 transmits an MMT protocol (MMTP) packet including media content on the basis of a request of the broadcast receiving device 100. The broadcast receiving device 100 receives the PI document. The broadcast receiving device 100 receives a transmission packet including media content. The broadcast receiving device 100 extracts the media content from the transmission packet including the media content. The broadcast receiving device 100 presents the media content on the basis of the PI document.

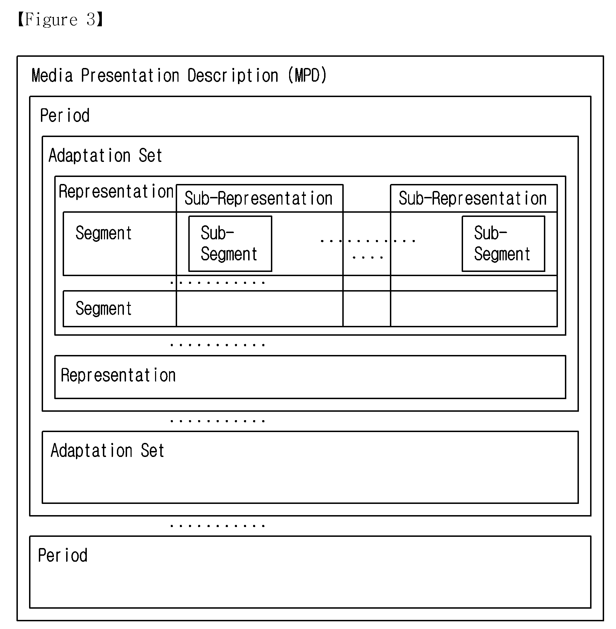

In another specific embodiment, as illustrated in Fig. 2, media content may be transmitted/received via an IP network according to an MPEG-Dynamic Adaptive Streaming over HTTP (DASH) standard. In Fig. 2, the content server 50 transmits a media presentation description (MPD) including the media content presentation information. However, depending on a specific embodiment, the MPD may be transmitted by another external server instead of the content server 50. Furthermore, the content server 50 transmits a segment including media content on the basis of a request of the broadcast receiving device 100. The broadcast receiving device 100 receives the MPD. The broadcast receiving device 100 requests media content from the content server 50 on the basis of the MPD. The broadcast receiving device 100 receives a transmission packet including media content on the basis of a request. The broadcast receiving device 100 presents the media content on the basis of the MPD. To this end, the broadcast receiving device 100 may include a DASH client in the control unit 110. The DASH client may include an MPD parser for parsing the MPD, a segment parser for parsing the segment, an HTTP client for transmitting an HTTP request message and receiving an HTTP response message via the IP transmitting/receiving unit 130, and a media engine for presenting media. The MPD will be described in detail with reference to Figs. 3 to 5.

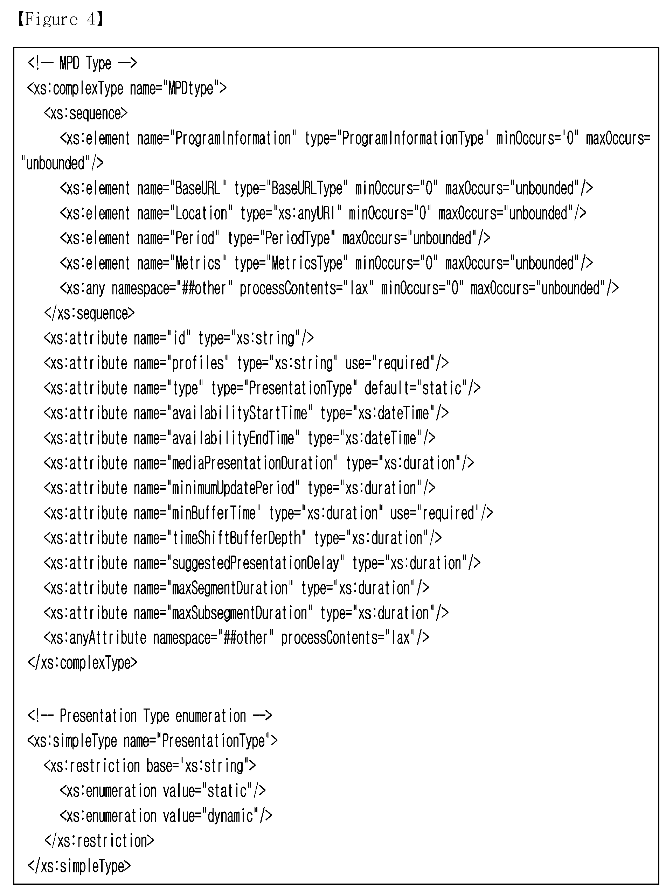

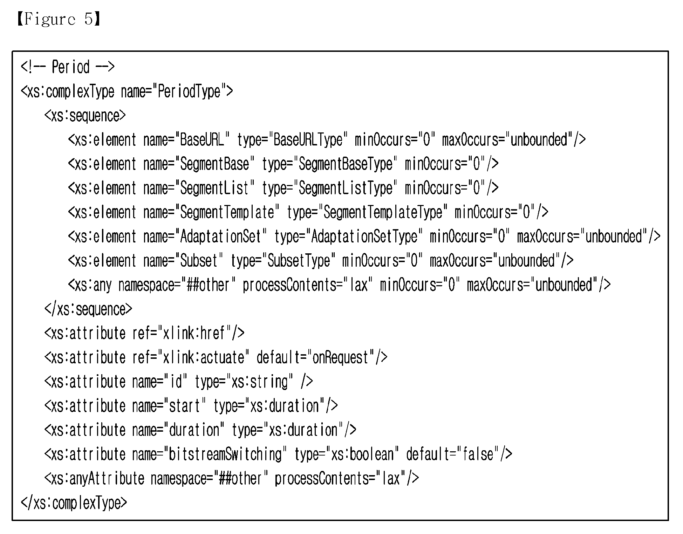

Fig. 3 illustrates a structure of the MPD according to an embodiment. Fig. 4 illustrates a syntax of the MPD according to an embodiment. Fig. 5 illustrates an XML syntax of a period element of the MPD according to an embodiment.

The MPD may include a period element, an adaptation set element, and a representation element.

The period element includes information on a period. The MPD may include information on a plurality of periods. The period represents a continuous time interval of media content presentation.

The adaptation set element includes information on an adaptation set. The MPD may include information on a plurality of adaptation sets. The adaptation set is a set of media components including one or more interconvertible media content components. The adaptation set may include one or more representations. The adaptation sets may respectively include audios of different languages or subtitles of different languages.

The representation element includes information on a representation. The MPD may include information on a plurality of representations. The representation is a structured set of one or more media components. There may exist a plurality of representations differently encoded for the same media content component. In the case where bitstream switching is allowed, the broadcast receiving device 100 may switch a received representation to another representation on the basis of information updated during presentation of media content. In particular, the broadcast receiving device 100 may switch a received representation to another representation according to conditions of a bandwidth. The representation is divided into a plurality of segments.

The segment is a unit of media content data. The representation may be transmitted as the segment or a part of the segment according to a request of the media content receiver 30 using the HTTP GET or HTTP partial GET method defined in the HTTP 1.1 (RFC 2616) protocol.

Furthermore, the segment may include a plurality of sub-segments. The sub-segment may represent a smallest unit able to be indexed at a segment level. The segment may include an initialization segment, a media segment, an index segment, and a bitstream switching segment.

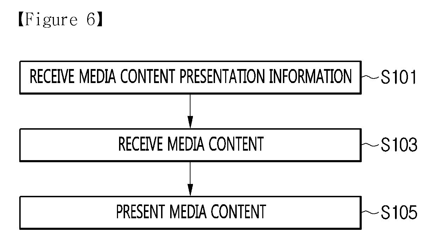

Fig. 6 is a flowchart illustrating an operation of receiving, by a broadcast receiving device, media content via an IP network according to an embodiment.

The broadcast receiving device 100 receives the media content presentation information via the IP transmitting/receiving unit 130 (S101). In a specific embodiment, the media content presentation information may be the MPD according to the MPEG-DASH standard. Here, the broadcast receiving device 100 may receive the MPD via the IP transmitting/receiving unit 130. In another specific embodiment, the media content presentation information may be the PI document according to the MMT standard. Here, the broadcast receiving device 100 may receive the PI document via the IP transmitting/receiving unit 130.

The broadcast receiving device 100 receives media content via the IP transmitting/receiving unit 130 on the basis of the media content presentation information (S103).

The broadcast receiving device 100 presents the media content via the control unit 110 (S105). In detail, the broadcast receiving device 100 may present the media content on the basis of the media content presentation information via the control unit 110.

As described above, the broadcast receiving device 100 that receives a broadcast stream via a satellite, cable or terrestrial broadcasting network is required to receive the media content presentation information in order to receive media content via an IP network. In particular, the media content presentation information is required to be transmitted or received via a broadcast stream in order to efficiently interwork with content transmitted via a broadcasting network. This is because a content provider or a broadcaster may integrally manage content information provided via a broadcasting network and information on media content transmitted via an IP network in the case where the media content presentation information is transmitted via a broadcast stream. Furthermore, this is because the broadcast receiving device 100 may quickly determine whether the media content presentation information is updated without an additional information request message in the case where the media content presentation information is transmitted via a broadcast stream since the broadcast receiving device 100 continually receives a broadcast stream.

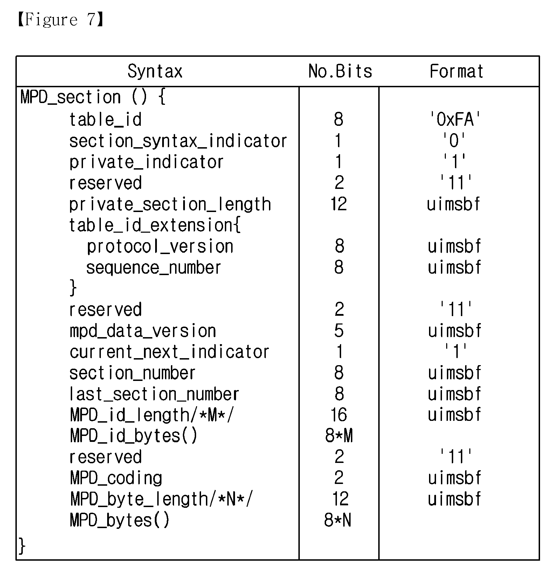

Described below with reference to Figs. 7 to 21 is a method of transmitting/receiving the media content presentation information using a broadcast stream transmitted via a broadcasting network instead of an IP network.

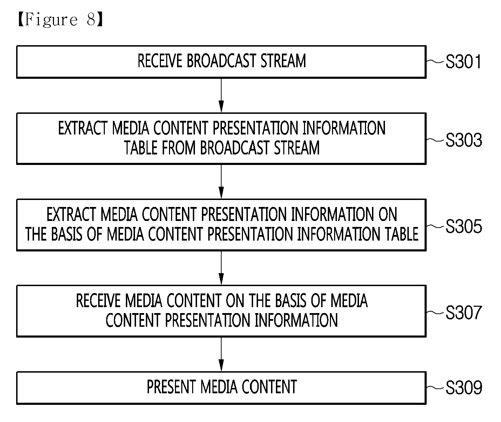

A content provider or a broadcaster may add the media content presentation information to a media content presentation information table to transmit the media content presentation information. This operation of adding the media content presentation information to the media content presentation information table to transmit the media content presentation information is described below with reference to Figs. 7 and 8.

In the case where the media content presentation information is added to the media content presentation information table so as to be transmitted, the broadcast receiving device 100 may receive the media content presentation information on the basis of the media content presentation information table. In detail, the broadcast receiving device 100 may extract the media content presentation information from the media content presentation information table to receive the media content presentation information.

Here, the media content presentation information table may include an id element for identifying the media content presentation information table among various information tables.

Furthermore, the media content presentation information table may include an id_extension element. The id_extension element may indicate an identifier for identifying a media content presentation information table instance. Here, an id_extension field may include a protocol_version field indicating a protocol version of the media content presentation information table. The id_extension field may also include a sequence_number field for identifying each of a plurality of media content presentation information tables including different pieces of media content presentation information. The id_extension element may indicate a service identifier for identifying a broadcasting service associated with the media content presentation information table. Here, the id_extension element may indicate any one of a program number, a service id, and a source id.

Furthermore, the media content presentation information table may include a version element indicating a version of the media content presentation information table. Here, the broadcast receiving device 100 may determine whether the media content presentation information table is updated on the basis of the version element. In detail, the broadcast receiving device 100 may determine that the media content presentation information table has been updated, upon receiving the media content presentation information table having a version element value different from that of a previously received media content presentation information table. Here, the broadcast receiving device 100 may extract the media content presentation information from the media content presentation information table. Furthermore, the broadcast receiving device 100 may determine that the media content presentation information table has not been updated, upon receiving the media content presentation information table having the same version element value as that of a previously received media content presentation information table. In this case, the broadcast receiving device 100 does not extract the media content presentation information from the media content presentation information table. In a specific embodiment, the version element may have the same value as that of the version element included in the media content presentation information.

Furthermore, the media content presentation information table may include a media content presentation information id element indicating an identifier for identifying the media content presentation information.

Here, the media content presentation information table may include a media content presentation information id_length element indicating a length of the identifier for identifying the media content presentation information.

Furthermore, the media content presentation information table may include a coding element indicating an encoding method of the media content presentation information. Here, the coding element that indicates the encoding method may indicate that the media content presentation information table includes the media content presentation information without particularly compressing the media content presentation information. Furthermore, the coding element that indicates the encoding method may indicate that the media content presentation information table includes the media content presentation information compressed by a specific algorithm. Here, the specific algorithm may be a gzip algorithm.

Furthermore, the media content presentation information table may include a byte_length element indicating a length of the media content presentation information.

Furthermore, the media content presentation information table may include a byte() element that is the media content presentation information itself.

Here, the media content presentation information table may have an XML, HTML5 or bitstream format.

Fig. 7 illustrates a bitstream syntax for the case where the MPD is transmitted in a format of an MPD information table according to an embodiment.

Fig. 7 illustrates the case where the media content presentation information table has a bitstream format, and the media content presentation information is included in the MPD. Therefore, with respect to Fig. 7, the media content presentation information table is referred to as an MPD information table.

The MPD information table includes a table_id field, a section_syntax_indicator field, a private_indicator field, a private_section_length field, a table_id_extension field, an MPD_data_version field, a section_number field, a last_section_number field, an MPD_id_length field, an MPD_id_bytes field, an MPD_coding field, an MPD_byte_length field, and an MPD_byte field.

In the example of Fig. 7, the table_id field indicates an identifier of the MPD information table. Here, the table_id field may be 0xFA that is one of reserved id values defined in ATSC A/65.

The section_syntax_indicator field indicates whether the MPD information table is a long-type private section table of an MPEG-2 TS standard. Since the MPD information table is not a long-type table, the section_syntax_indicator field has a value of 0.

The private_indicator field indicates whether a current table corresponds to a private section. Since the MPD information table corresponds to the private section, the private_indicator field has a value of 1.

The private_section_length field indicates a length of a section following the private_section_length field.

The table_id_extension field indicates an identifier for identifying a broadcasting service associated with the MPD transmitted via the MPD information table. Here, the table_id_extension field may indicate any one of a program number, a service id, and a source id. In another embodiment, the table_id_extension field may indicate an identifier for identifying the MPD. In detail, the table_id_extension field may include a protocol_version field indicating a protocol version of the MPD information table. Furthermore, the table_id_extension field may include a sequence_number field for identifying each of a plurality of MPD information tables including different MPDs.

The MPD_data_version field indicates a version of the MPD information table. Here, the broadcast receiving device 100 may determine whether the MPD information table is updated on the basis of the MPD_data_version field. The MPD_data_version field may have the same value as that of the version element included in the MPD.

The section_number field indicates a number of a current section.

The last_section_number field indicates a number of a last section. In the case where the MPD information table has a large size, the MPD information table may be divided into a plurality of sections so as to be transmitted. Here, the broadcast receiving device 100 determines whether all sections required for the MPD information table are received on the basis of the section_number field and the last_section_number field.

The MPD_id_bytes field indicates an identifier for identifying the MPD.

The MPD_id_length field indicates a length of the identifier for identifying the MPD.

The MPD_coding field indicates an encoding method for the MPD. Here, the MPD_coding field that indicates the encoding method may indicate that the MPD information table includes the media content presentation information without particularly compressing the media content presentation information. Furthermore, the MPD_coding field may indicate that the MPD information table includes the MPD compressed by a specific algorithm. Here, the specific algorithm may be a gzip algorithm. In a specific embodiment, a value of the MPD_coding field may be defined as shown in Table 1.

[Table 1]

| Value | Designation |
|---|---|
| 0×00 | Plain text |
| 0×01 | Compressed by gzip |
| 0×02-0×03 | Reserved for future use |

In the example of Table 1, in the case where the MPD_coding field has a value of 0x00, the MPD_coding field indicates that the MPD information table includes the media content presentation information without particularly compressing the media content presentation information. In the case where the MPD_coding field has a value of 0x01, the MPD_coding field indicates that the MPD information table includes the MPD compressed by a gzip algorithm.

The MPD_byte_length field indicates a length of the MPD.

The MPD_byte() field includes actual data of the MPD included in the MPD information table.

Fig. 8 is a flowchart illustrating an operation of extracting, by a broadcast receiving device, the MPD on the basis of an information table including the MPD according to an embodiment.

The broadcast receiving device 100 receives a broadcast stream via the broadcast receiving unit 150 (S301).

The broadcast receiving device 100 extracts the media content presentation information table from the broadcast stream via the control unit 110 (S303). In a specific embodiment, the broadcast receiving device 100 may extract the media content presentation information table from the broadcast stream on the basis of the id element via the control unit 110. In detail, the broadcast receiving device 100 may extract the media content presentation information table from the broadcast stream on the basis of information in which the id element is combined with the id_extension element via the control unit 110. For example, the broadcast receiving device 100 may identify the media content presentation information table using a value of the id element via the control unit 110 so as to extract the media content presentation information table from the broadcast stream. Here, the broadcast receiving device 100 may identify the media content presentation information table using a value obtained by combining the value of the id element and the value of the id_extension element via the control unit 110 so as to extract the media content presentation information table from the broadcast stream.

The broadcast receiving device 100 extracts the media content presentation information on the basis of the media content presentation information table via the control unit 110 (S305). Here, in the case where the media content presentation information is compressed, the broadcast receiving device 100 may decompress the media content presentation information via the control unit 110 so as to extract the media content presentation information.

The broadcast receiving device 100 receives media content via the IP transmitting/receiving unit 130 on the basis of the media content presentation information (S307).

The broadcast receiving device 100 presents the media content via the control unit 110 (S309). In detail, the broadcast receiving device 100 may present the media content on the basis of the media content presentation information via the control unit 110.

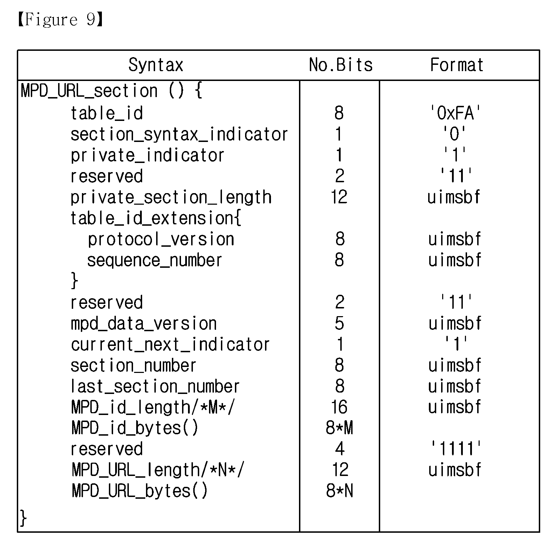

A content provider or a broadcaster may add the media content presentation information to an IP datagram to transmit the media content presentation information via a broadcasting network instead of an IP network. Here, the content provider or the broadcaster may add the media content presentation information table including the media content presentation information to the IP datagram to transmit the media content presentation information table. This operation of adding the media content presentation information to the IP datagram to transmit the media content presentation information is described below with reference to Figs. 9 to 12.

In the case where the media content presentation information is added to the IP datagram so as to be transmitted, the broadcast receiving device 100 may receive the media content presentation information on the basis of a media IP datagram. In a specific embodiment, the broadcast receiving device 100 may extract the media content presentation information from the IP datagram to receive the media content presentation information. In another specific embodiment, the broadcast receiving device 100 may extract the media content presentation information table from the IP datagram to receive the media content presentation information.

Here, the media content presentation information may be added to a UDP payload. The UDP payload may include a payload_type field and a payload field. The payload_type field indicates a data type of the media content presentation information included in the payload field. Here, a value of the payload_type field may indicate that the media content presentation information included in the payload field is a file itself. In a specific embodiment, in the case where the media content presentation information is included in the MPD, the value of the payload_type field may indicate that the payload field includes the MPD as it is. In another specific embodiment, in the case where the media content presentation information is included in the PI document, the value of the payload_type field may indicate that the payload field includes the PI document as it is. Furthermore, the value of the payload_type field may indicate that the media content presentation information is included in a specific syntax format. Furthermore, the value of the payload_type field may indicate that the media content presentation information is included in the form of the above-mentioned media content presentation information table.

The payload field may include the media content presentation information.

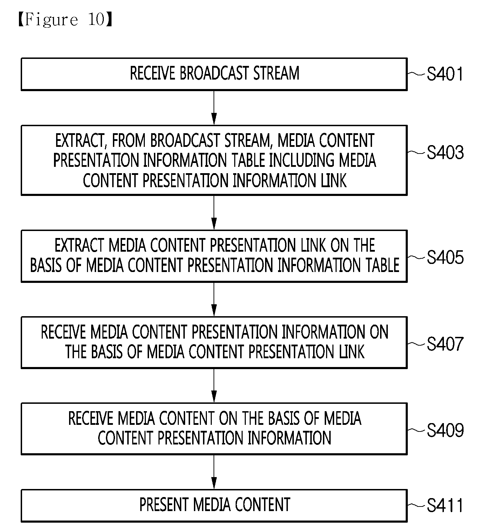

The content provider or the broadcaster may add a media content presentation information link to the media content presentation information table to transmit the media content presentation information link. Here, the media content presentation information link may provide a link to the media content presentation information so that the media content presentation information is received. Here, the media content presentation information link may have a format of a uniform resource locator (URL). This operation of adding the media content presentation information link to the media content presentation information table to transmit the media content presentation information link is described below with reference to Figs. 9 and 10.

In the case where the media content presentation information link is added to the media content presentation information table so as to be transmitted, the broadcast receiving device 100 may receive the media content presentation information on the basis of the media content presentation information table. In detail, the broadcast receiving device 100 may extract the media content presentation information link from the media content presentation information table. Here, the broadcast receiving device 100 may receive the media content presentation information from the media content presentation information link.

Here, the media content presentation information table may include an id element for identifying the media content presentation information table among various information tables.

Furthermore, the media content presentation information table may include an id_extension element. The id_extension element may indicate an identifier for identifying a media content presentation information table instance. Here, an id_extension field may include a protocol_version field indicating a protocol version of the media content presentation information table. The id_extension field may also include a sequence_number field for identifying each of a plurality of media content presentation information tables including different pieces of media content presentation information. The id_extension element may indicate a service identifier for identifying a broadcasting service associated with the media content presentation information table. Here, the id_extension element may indicate any one of a program number, a service id, and a source id.

Furthermore, the media content presentation information table may include a version element indicating a version of the media content presentation information table. Here, the broadcast receiving device 100 may determine whether the media content presentation information table is updated on the basis of the version element. In detail, the broadcast receiving device 100 may determine that the media content presentation information table has been updated, upon receiving the media content presentation information table having a version element value different from that of a previously received media content presentation information table. Here, the broadcast receiving device 100 may extract the media content presentation information from the media content presentation information table. Furthermore, the broadcast receiving device 100 may determine that the media content presentation information table has not been updated, upon receiving the media content presentation information table having the same version element value as that of a previously received media content presentation information table. In this case, the broadcast receiving device 100 does not extract the media content presentation information from the media content presentation information table. In a specific embodiment, the version element may have the same value as that of the version element included in the media content presentation information.

Furthermore, the media content presentation information table may include a media content presentation information id element indicating an identifier for identifying the media content presentation information.

Here, the media content presentation information table may include a media content presentation information id_length element indicating a length of the identifier for identifying the media content presentation information.

Furthermore, the media content presentation information table may include a byte_length element indicating a length of the media content presentation information link.

Furthermore, the media content presentation information table may include a byte() element that is the media content presentation information link itself. Here, the media content presentation information link may have a URL format.

Here, the media content presentation information table may have an XML, HTML5 or bitstream format.

Fig. 9 illustrates an MPD link table including an MPD link according to an embodiment.

Fig. 9 illustrates the case where the media content presentation information table has a bitstream format, and the media content presentation information is included in the MPD. Therefore, with respect to Fig. 9, the media content presentation information table is referred to as an MPD information table. The media content presentation information link has a URL format. Therefore, the media content presentation information link is referred to as an MPD_URL.

The MPD information table includes a table_id field, a section_syntax_indicator field, a private_indicator field, a private_section_length field, a table_id_extension field, an MPD_data_version field, a section_number field, a last_section_number field, an MPD_id_length field, an MPD_id_byte field, an MPD_URL_length field, and an MPD_URL_bytes field.

In the example of Fig. 9, the table_id field indicates an identifier of the MPD information table. Here, the table_id field may be 0xFA that is one of reserved id values defined in ATSC A/65.

The section_syntax_indicator field indicates whether the MPD information table is a long-type private section table of the MPEG-2 TS standard. Since the MPD information table is not a long-type table, the section_syntax_indicator field has a value of 0.

The private_indicator field indicates whether a current table corresponds to a private section. Since the MPD information table corresponds to the private section, the private_indicator field has a value of 1.

The private_section_length field indicates a length of a section following the private_section_length field.

The table_id_extension field indicates an identifier for identifying a broadcasting service associated with the MPD transmitted via the MPD information table. Here, the table_id_extension field may indicate any one of a program number, a service id, and a source id. In another embodiment, the table_id_extension field may indicate an identifier for identifying the MPD. In detail, the table_id_extension field may include a protocol_version field indicating a protocol version of the MPD information table. Furthermore, the table_id_extension field may include a sequence_number field for identifying each of a plurality of MPD information tables including different MPDs.

The MPD_data_version field indicates a version of the MPD information table. Here, the broadcast receiving device 100 may determine whether the MPD information table is updated on the basis of the MPD_data_version field. The MPD_data_version field may have the same value as that of the version element included in the MPD.

The section_number field indicates a number of a current section.

The last_section_number field indicates a number of a last section. In the case where the MPD information table has a large size, the MPD information table may be divided into a plurality of sections so as to be transmitted. Here, the broadcast receiving device 100 determines whether all sections required for the MPD information table are received on the basis of the section_number field and the last_section_number field.

The MPD_id_bytes field indicates an identifier for identifying the MPD.

The MPD_id_length field indicates a length of the identifier for identifying the MPD.

The MPD_URL_length field indicates a length of the MPD_URL.

The MPD_URL_bytes() field indicates the MPD_URL itself.

Fig. 10 is a flowchart illustrating an operation of receiving, by a broadcast receiving device, the MPD on the basis of the media content presentation information table including the media content presentation information link according to an embodiment.

The broadcast receiving device 100 receives a broadcast stream via the broadcast receiving unit 150 (S401).

The broadcast receiving device 100 extracts the media content presentation information table including the media content presentation information link from the broadcast stream via the control unit 110 (S403). In a specific embodiment, the broadcast receiving device 100 may extract the media content presentation information table from the broadcast stream on the basis of the id element via the control unit 110. In detail, the broadcast receiving device 100 may extract the media content presentation information table from the broadcast stream on the basis of information in which the id element is combined with the id_extension element via the control unit 110. For example, the broadcast receiving device 100 may identify the media content presentation information table using a value of the id element via the control unit 110 so as to extract the media content presentation information table from the broadcast stream. Here, the broadcast receiving device 100 may identify the media content presentation information table using a value obtained by combining the value of the id element and the value of the id_extension element via the control unit 110 so as to extract the media content presentation information table from the broadcast stream.

The broadcast receiving device 100 extracts the media content presentation information link on the basis of the media content presentation information table via the control unit 110 (S405). Here, the media content presentation information link may have a URL format.

The broadcast receiving device 100 receives the media content presentation information on the basis of the media content presentation information link via the IP transmitting/receiving unit 130 (S407).

The broadcast receiving device 100 receives media content via the IP transmitting/receiving unit 130 on the basis of the media content presentation information (S409).

The broadcast receiving device 100 presents the media content via the control unit 110 (S411). In detail, the broadcast receiving device 100 may present the media content on the basis of the media content presentation information via the control unit 110.

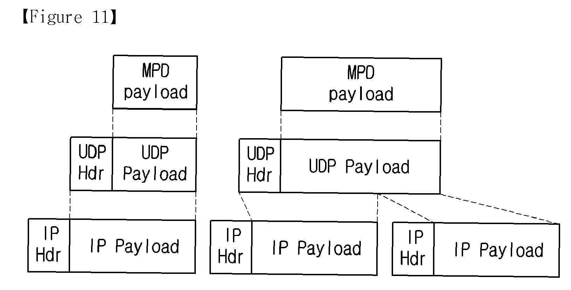

Figs. 11 to 13 illustrate the case where the media content presentation information is included in the MPD. Fig. 11 illustrates that the MPD or the MPD information table is added to an IP datagram so as to be transmitted according to an embodiment.

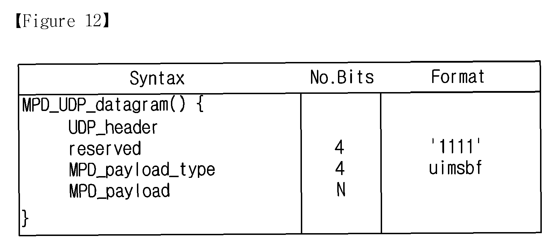

As exemplified by the data structure of Fig. 11, the IP datagram includes a UDP datagram in an IP payload in the examples of Figs. 11 to 13. The UDP datagram includes the MPD or the MPD information table in a UDP payload. A syntax of the IP datagram will be described in detail with reference to Fig. 12.

Fig. 12 illustrates the syntax of the IP datagram for the case where the MPD or the MPD information table is added to the IP datagram so as to be transmitted according to an embodiment.

The UDP payload includes an MPD_payload_type field and a payload field. The MPD_payload_type field indicates a data type of the MPD included in the MPD_payload field. A value of the MPD_payload_type field may indicate that the MPD_payload field includes the MPD itself. Furthermore, the value of the MPD_payload_type field may indicate that the MPD_payload field includes the MPD in a specific syntax format. In detail, the value of the MPD_payload_type field may be defined as shown in Table 2 below.

[Table 2]

| Value | Designation |
|---|---|
| 0×00 | Not specified |
| 0×01 | Syntax |
| 0×02 | MPD file as it is |
| 0×03 | MPD section |
| 0×03 | Reserved for future use |

In the example of Table 2, in the case where the value of the MPD_payload_type field is 0x01, the MPD_payload_type field indicates that the MPD_payload field includes the MPD in a specific syntax format. In the case where the value of the MPD_payload_type field is 0x02, the MPD_payload_type field indicates that the MPD_payload field includes the MPD as it is. In the case where the value of the MPD_payload_type field is 0x03, the MPD_payload_type field indicates that the MPD_payload field includes the MPD in the form of the above-mentioned MPD information table.

The MPD_payload field includes the MPD.

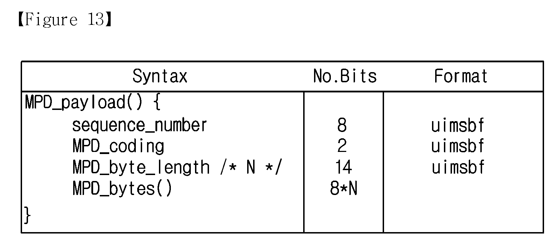

Fig. 13 illustrates a syntax of an MPD payload included in the IP datagram for the case where the MPD or the MPD information table is added to the IP datagram so as to be transmitted according to an embodiment.

An MPD_coding field indicates an encoding method for the MPD or the MPD information table. Here, the MPD_coding field that indicates the encoding method may indicate that the MPD payload includes the MPD or the MPD information table without particularly compressing the MPD or the MPD information table. Furthermore, the MPD_coding field may indicate that the MPD payload includes the MPD or the MPD information table compressed by a specific algorithm. Here, the specific algorithm may be a gzip algorithm. In a specific embodiment, a value of the MPD_coding field may be defined as shown in Table 3.

[Table 3]

| Value | Designation |
|---|---|
| 0×00 | Plain text |
| 0×01 | Compressed by gzip |
| 0×02-0×03 | Reserved for future use |

In the example of Table 3, in the case where the MPD_coding field has a value of 0x00, the MPD_coding field indicates that the MPD payload includes the MPD or the MPD information table without particularly compressing the MPD or the MPD information table. In the case where the MPD_coding field has a value of 0x01, the MPD_coding field indicates that the MPD payload includes the MPD or the MPD information table compressed by a gzip algorithm.

An MPD_byte_length field indicates a length of the MPD or the MPD information table.

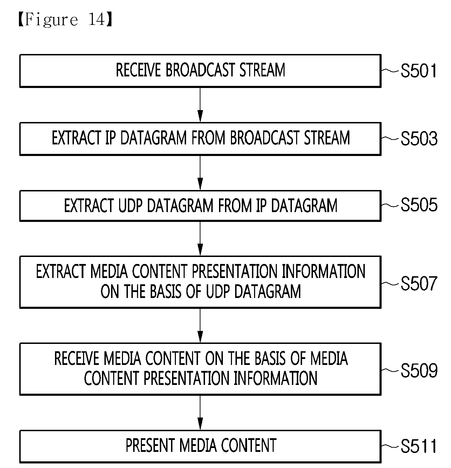

Fig. 14 is a flowchart illustrating an operation of extracting, by a broadcast receiving device, the media content presentation information or the media content presentation information table on the basis of the IP datagram including the media content presentation information or the media content presentation information table according to an embodiment.

The broadcast receiving device 100 receives a broadcast stream via the broadcast receiving unit 150 (S501).

The broadcast receiving device 100 extracts the IP datagram from the broadcast stream via the control unit 110 (S503).

The broadcast receiving device 100 extracts the UDP datagram from the IP datagram via the control unit 110 (S505). In detail, the broadcast receiving device 100 extracts the UDP datagram from a payload of the IP datagram.

The broadcast receiving device 100 extracts the media content presentation information on the basis of the UDP datagram via the control unit 110 (S507). In detail, the broadcast receiving device 100 extracts the media content presentation information or the media content presentation information table from the payload of the UDP datagram. In a specific embodiment, in the case where the media content presentation information or the media content presentation information table is compressed, the broadcast receiving device 100 may decompress the media content presentation information or the media content presentation information table via the control unit 110 so as to extract the media content presentation information or the media content presentation information table. Here, the broadcast receiving device 100 may decompress the media content presentation information or the media content presentation information table on the basis of a coding field included in the UDP datagram. Here, the broadcast receiving device 100 may extract the media content presentation information from the media content presentation information table via the control unit 110.

The broadcast receiving device 100 receives media content via the IP transmitting/receiving unit 130 on the basis of the media content presentation information (S507).

The broadcast receiving device 100 presents the media content via the control unit 110 (S509). In detail, the broadcast receiving device 100 may present the media content on the basis of the media content presentation information via the control unit 110.

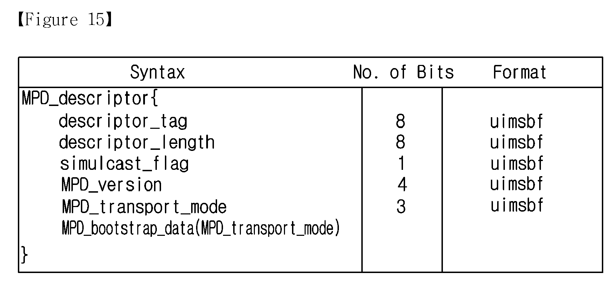

A content provider or a broadcaster may add a method of transmitting the media content presentation information to a broadcast information signaling table to transmit the method of transmitting the media content presentation information. This operation of adding the method of transmitting the media content presentation information to the broadcast information signaling table to transmit the method of transmitting the media content presentation information is described below with reference to Figs. 15 to 23. Here, the broadcast information signaling table may have an XML, HTML5 or bitstream format.

In a specific embodiment, the content provider or the broadcaster may add a descriptor including the method of transmitting the media content presentation information to the broadcast information signaling table to transmit the descriptor.

Here, the broadcast information signaling information table may be one of a program specific information (PSI) table defined in an ISO/IEC 13818-1 standard, a system information (SI) table defined in an ETSI EN 300 468 standard, and a program and system information protocol (PSIP) table defined in an ATSC standard. In particular, the signaling information table may be an information table for signaling information on broadcast content. Here, the information on broadcast content may be one of information on a broadcasting service, information on an elementary stream, and information on an event. In detail, the information table may be one of a terrestrial virtual channel table (TVCT) and an event information table (EIT) among tables defined in A/65 that is one of ATSC standards, a service map table (SMT) among tables defined in A/153, a service description table (SDT) and an EIT defined in an ETSI EN 300 468 standard, and a program map table (PMT) defined in an ISO/IEC 13818-1 standard.

The descriptor may include a tag element for identifying the descriptor.

Furthermore, the descriptor may include a length element indicating a length of the descriptor.

The descriptor may include a simulcast_flag indicating that broadcast content specified by the descriptor is simultaneously transmitted via not only a broadcasting network but also an IP network. Here, the broadcast content may be one of an elementary stream specified by the descriptor, a service specified by the descriptor, and an event specified by the descriptor. In the case where the simulcast_flag has a value of 1 and transmission of a broadcast stream via the broadcasting network is unstable, the broadcast receiving device 100 may receive the broadcast content specified by the descriptor via the IP network. In detail, in the case where the simulcast_flag has a value of 1 and a strength of a signal of the broadcast stream transmitted via the broadcasting network is lower than a certain reference level or presentation interruption of the broadcast content occurs, the broadcast receiving device 100 may receive the broadcast content specified by the descriptor via the IP network. Here, the broadcast receiving device 100 may notify a user that the broadcast content specified by the descriptor is able to be received. Furthermore, the broadcast receiving device 100 may receive the broadcast content specified by the descriptor on the basis of an input from the user. In detail, the broadcast receiving device 100 may receive the broadcast content specified by the descriptor via the IP network, upon receiving an input from the user.

Furthermore, the descriptor may include a version element indicating a version of the media content presentation information.

Moreover, the descriptor may include a transport_mode element indicating a specific method of transmitting the media content presentation information or the media content presentation information table. Here, a value of the transport_mode element may indicate that the descriptor directly includes the media content presentation information or the media content presentation information table. Furthermore, the value of the transport_mode element may indicate that the media content presentation information or the media content presentation information table may be downloaded via a link address included in the descriptor. The value of the transport_mode element may indicate that an information table included in a packet that is different from a packet that includes the descriptor includes the media content presentation information. The value of the transport_mode element may indicate that an additional broadcast stream includes the media content presentation information. The value of the transport_mode element may indicate that an IP datagram includes the media content presentation information or the media content presentation information table. The value of the transport_mode element may indicate that the media content presentation information or the media content presentation information table is transmitted using a session-based transport protocol. Here, the session-based transport protocol may be File Delivery over Unidirectional Transport (FLUTE). The session-based transport protocol may be Asynchronous Layered Coding (ALC)/Layered Coding Transport (LCT).

The descriptor may include a bootstrap_data element including specific transmission information corresponding to a method of transmitting the media content presentation information or the media content presentation information table. Here, in the case where the descriptor directly includes the media content presentation information, the bootstrap_data element may include the media content presentation information itself. In this case, the broadcast receiving device 100 may extract the media content presentation information from the descriptor.

In the case where the media content presentation information or the media content presentation information table is able to be received via a link included in the descriptor, the bootstrap_data element may include a link for downloading the media content presentation information or the media content presentation information table. In a specific embodiment, the broadcast receiving device 100 may access the link to download the media content presentation information or the media content presentation information table. Here, the link may be provided in plurality. Furthermore, there may be a priority order for the plurality of links. In this case, the broadcast receiving device 100 may attempt to download the media content presentation information or the media content presentation information table in descending order of priorities of the links. Here, the links may have a URL format.

In the case where an information table included in a packet that is different from a packet that includes the descriptor includes the media content presentation information or the media content presentation information link for providing a link to the media content presentation information, the bootstrap_data element may include an identifier of a packet that includes the media content presentation information or the media content presentation information link. Here, a table ID of the information table may be predetermined. However, in the case where the table ID of the information table is not predetermined, the bootstrap_data element may include the table ID of the information table. Here, the information table may be the above-mentioned media content presentation information table.

In the case where an additional broadcast stream includes the media content presentation information or the media content presentation information link, the bootstrap_data element may include an identifier of a packet and an identifier of the broadcast stream including the media content presentation information or the media content presentation information link. Here, in the case where the broadcast stream complies with the MPEG-2 TS standard, the identifier of the broadcast stream may be a TS ID and the packet identifier may be a PID. In detail, the information table included in the packet may include the media content presentation information or the media content presentation information link. Here, the table ID of the information table may be predetermined. However, in the case where the table ID of the information table is not predetermined, the bootstrap_data element may include the table ID of the information table. Here, the information table including the media content presentation information may be the above-mentioned media content presentation information table.

In the case where an IP datagram includes the media content presentation information or the media content presentation information table, the bootstrap_data element may include an identifier of a data transmission channel of a physical layer for downloading the IP datagram including the media content presentation information, an IP address, a port number, a flag indicating whether a source IP address is included, the source IP address, and a version of an IP address format.

In the case where the media content presentation information or the media content presentation information table is transmitted via a session-based transport protocol session, the bootstrap_data element may include an identifier of a data transmission channel of a physical layer for downloading the media content presentation information or the media content presentation information table, an identifier of a session, an IP address of the session, a port number of the session, a flag indicating whether a source IP address of the session is included, the source IP address of the session, and a version of an IP address format. As described above, the session-based transport protocol may be FLUTE. The session-based transport protocol may be ALC/LCT. In the case where the session-based transport protocol is FLUTE, the identifier of the session may be TSI that is a FLUTE session identifier.

In the examples of Figs. 15 to 21, the MPD includes the media content presentation information. Therefore, with respect to the examples of Figs. 15 to 21, a descriptor including a method of transmitting the media content presentation information or the media content presentation information table is referred to as an MPD descriptor. Here, the MPD descriptor is included in a bitstream-type broadcast information signaling information table.

Fig. 15 illustrates a syntax of the MPD descriptor for transmitting the MPD according to an embodiment.

The MPD descriptor includes a descriptor_tag field, a descriptor_length field, an MPD_version field, a simulcast_flag field, an MPD_transport mode field, and an MPD_bootstrap_data field.

The descriptor_tag field indicates an identifier of the MPD descriptor.

The descriptor_length field indicates a length of the MPD descriptor.

The MPD_version field indicates a version of the MPD.

The simulcast_flag field indicates that broadcast content specified by the MPD descriptor is simultaneously transmitted via not only a broadcasting network but also an IP network. Here, the broadcast content may be one of an elementary stream specified by the MPD descriptor, a service specified by the MPD descriptor, and an event specified by the MPD descriptor. In the case where the simulcast_flag has a value of 1 and transmission of a broadcast stream via the broadcasting network is unstable, the broadcast receiving device 100 may receive the broadcast content specified by the descriptor via the IP network. In detail, in the case where the simulcast_flag has a value of 1 and a strength of a signal of the broadcast stream transmitted via the broadcasting network is lower than a certain reference level or presentation interruption of the broadcast content occurs, the broadcast receiving device 100 may receive the broadcast content specified by the descriptor via the IP network. Here, the broadcast receiving device 100 may notify the user that the broadcast content specified by the MPD descriptor is able to be received. Furthermore, the broadcast receiving device 100 may receive the broadcast content specified by the MPD descriptor on the basis of an input from the user. In detail, the broadcast receiving device 100 may receive the broadcast content specified by the MPD descriptor via the IP network, upon receiving an input from the user.

The MPD_transport mode field indicates a specific method of transmitting the MPD, the MPD information table (MPD_Section) or the MPD link table (MPD_URL_Section). Here, a value of the MPD_transport mode field may indicate that the MPD descriptor directly includes the MPD. Furthermore, the value of the MPD_transport mode field may indicate that the MPD, the MPD information table, or the MPD link table is able to be downloaded via a link address included in the MPD descriptor. The value of the MPD_transport mode field may indicate that an information table included in a packet that is different from a packet that includes the MPD descriptor includes the MPD or the MPD_URL. Here, the MPD_URL indicates a URL for downloading the MPD. Here, the information table may be the above-mentioned MPD information table. The information table may be the above-mentioned MPD link information table. The value of the MPD_transport mode field may indicate that an additional broadcast stream includes the MPD or the MPD_URL. Here, the information table may be the above-mentioned MPD information table. The information table may be the above-mentioned MPD link information table. Furthermore, the value of the MPD_transport mode field may indicate that an IP datagram includes the MPD, the MPD information table, or the MPD link table. Furthermore, the value of the MPD_transport mode field may indicate that the MPD, the MPD information table, or the MPD link table is transmitted via a session-based transport protocol session such as FLUTE or ALC/LCT. In detail, the MPD_transport mode field may be assigned values as shown in Table 4 below.

[Table 4]

| Value | Designation |
|---|---|
| 0×00 | The MPD is delivered in MPD data bytes() |
| 0×01 | The location of MPD, MPD_Section or MPD_URL_Section is identified in the URL carried in the MPD URL |
| 0×02 | The MPD or MPD_URL is delivered by section as separate tables (e.g., MPEG-2 private section) in same broadcast network |
| 0×03 | The MPD or MPD_URL is delivered by section as separate tables (e.g., MPEG-2 private section) in different broadcast network |

(continued)

| Value | Designation |
|---|---|
| 0×04 | The MPD, MPD_Section or MPD_URL_Section is delivered in IP datagrams |
| 0×05 | The MPD, MPD_Section or MPD_URL is delivered in sessions (e.g., FLUTE, ALC/LCT, etc.) |
| 0×06-0×07 | Reserved for future use |

In the example of Table 4, in the case where the value of the MPD_transport mode field is 0x00, the MPD_transport mode field indicates that the MPD descriptor directly includes the MPD. In the case where the value of the MPD_transport mode field is 0x01, the MPD_transport mode field indicates that the MPD, the MPD information table, or the MPD link table is able to be downloaded via a link address included in the MPD descriptor. In the case where the value of the MPD_transport mode field is 0x02, the MPD_transport mode field indicates that an information table included in a packet that is different from a packet that includes the MPD descriptor includes the MPD or the MPD_URL. In the case where the value of the MPD_transport mode field is 0x03, the MPD_transport mode field indicates that an additional broadcast stream includes the MPD. In the case where the value of the MPD_transport mode field is 0x04, the MPD_transport mode field indicates that an IP datagram includes the MPD, the MPD information table or the MPD link table. In the case where the value of the MPD_transport mode field is 0x05, the MPD_transport mode field indicates that the MPD, the MPD information table or the MPD link table is transmitted via a transport protocol session. Here, the transport protocol may be FLUTE. Alternatively, the transport protocol may be ALC/LCT.

The MPD_bootstrap_data field includes specific transmission information according to a method of transmitting the MPD or the MPD information table. This configuration will be described in detail with reference to Figs. 14 to 19.

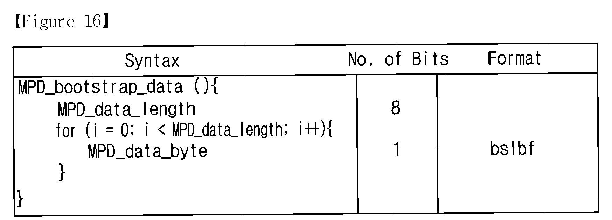

Fig. 16 illustrates a syntax of MPD bootstrap_data in the case where the MPD descriptor directly includes the MPD.

In the case where the MPD descriptor directly includes the media content presentation information, the bootstrap_data includes an MPD_data_length field and an MPD_data_byte field. The MPD_data_length field indicates a size of MPD data. The MPD_data_byte field indicates actual data of the MPD. In this case, the broadcast receiving device 100 may extract the MPD from the MPD descriptor.

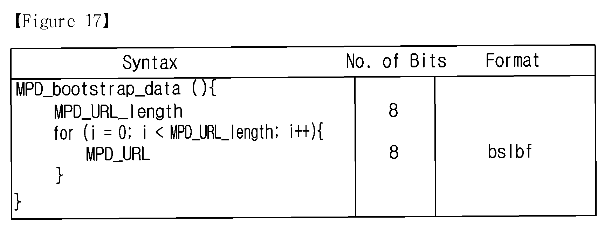

Fig. 17 illustrates the syntax of the MPD bootstrap_data in the case where the MPD descriptor includes a link address indicating a storage place of the MPD, the MPD information table or the MPD link table.

In the case where the MPD is downloadable via the link address included in the MPD descriptor, the bootstrap_data includes an MPD_URL_length field and an MPD_URL field. The MPD_URL_length field indicates a length of a URL. The MPD_URL field indicates a URL for downloading the MPD, the MPD information table or the MPD link table.

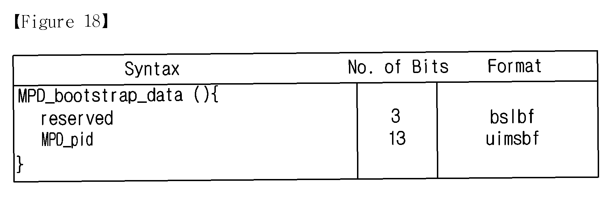

Fig. 18 illustrates the syntax of the MPD bootstrap_data in the case where the MPD descriptor includes an identifier of a data packet including the MPD.

In the case where an information table included in a packet that is different from a packet that includes the MPD descriptor includes the MPD and the MPD_URL, the bootstrap_data includes an MPD_pid field. Here, the information table may be the MPD information table as described above. Alternatively, the information table may be the MPD link information table as described above. The MPD_pid field indicates an identifier of a packet including the MPD. Here, in the case where a broadcast stream complies with the MPEG-2 TS standard, the packet identifier may be a PID. The broadcast receiving device 100 may extract the MPD on the basis of the MPD_pid field. The broadcast receiving device 100 may identify a packet including the MPD or the MPD_URL using a value of the MPD_pid field, and may extract the MPD or the MPD_URL from the packet including the MPD or the MPD_URL. Here, the table ID of the information table may be predetermined. However, in the case where the table ID of the information table is not predetermined, the bootstrap_data may include a table_id field indicating the table ID of the information table.

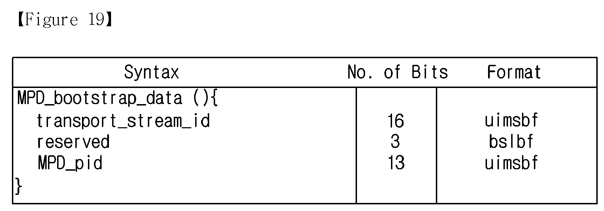

Fig. 19 illustrates the syntax of the MPD bootstrap_data in the case where the MPD descriptor includes an identifier of an additional broadcast stream including the MPD.

In the case where the additional broadcast stream includes the MPD or the MPD_URL, the bootstrap_data includes a transport_stream_id field and an MPD_pid field. The transport_stream_id field indicates an identifier of a broadcast stream including the MPD. The MPD_pid field indicates an identifier of a packet including the MPD or the MPD_URL. Here, in the case where the broadcast stream complies with the MPEG-2 TS standard, the identifier of the broadcast stream may be a TS ID and the packet identifier may be a PID. The broadcast receiving device 100 may extract the MPD or the MPD_URL on the basis of the transport_stream_id field and the MPD_pid field. The broadcast receiving device 100 may identify the broadcast stream including the MPD or the MPD_URL using the transport_stream_id field, and may identify the packet including the MPD using the MPD_pid field. Thereafter, the broadcast receiving device 100 may extract the MPD or the MPD_URL from the packet including the MPD or the MPD_URL. In a specific embodiment, the packet including the MPD may include the MPD information table. In another specific embodiment, the packet including the MPD_URL may include the MPD link information table. Here, the table ID of the information table may be predetermined. However, in the case where the table ID of the information table is not predetermined, the bootstrap_data may include a table_id field indicating the table ID of the information table.

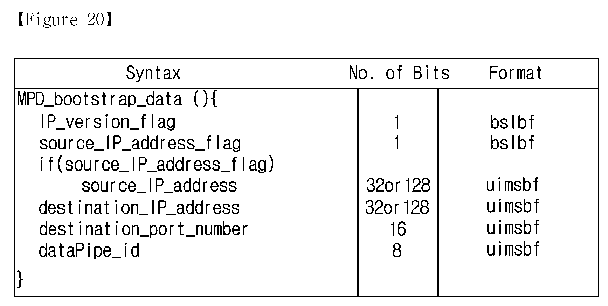

Fig. 20 illustrates the syntax of the MPD bootstrap_data in the case where the MPD descriptor includes information on an IP datagram including the MPD, the MPD information table or the MPD link information table.

In the case where the MPD descriptor includes information on an IP datagram including the MPD, the MPD information table or the MPD link information table, the bootstrap_data includes an IP_version_flag field, a source_IP_address_flag field, a source_IP_address field, a destination_IP_address field, a destination_port_number field, and a dataPipe_id field. The dataPipe_id field indicates an identifier of a data transmission channel of a physical layer. In detail, the broadcast receiving device 100 may obtain a specific IP datagram via a corresponding transmission channel. The IP_version_flag field indicates a version of an IP address format. The source_IP_address_flag field indicates whether a source IP address of the IP datagram including the MPD, the MPD information table or the MPD link information table is included. The destination_IP_address field indicates an IP address for downloading the IP datagram including the MPD, the MPD information table or the MPD link information table. The destination_port_number field indicates a port number for downloading the IP datagram including the MPD, the MPD information table or the MPD link information table. The broadcast receiving device 100 may extract the MPD, the MPD information table or the MPD link information table on the basis of the dataPipe_id field, the destination_IP_address field, and the destination_port_number field. The broadcast receiving device 100 may identify the data channel of the physical layer that transmits the IP datagram on the basis of the dataPipe_id field, and may extract the IP datagram including the MPD, the MPD information table or the MPD link information table on the basis of the destination_IP_address field and the destination_port_number field. Thereafter, the broadcast receiving device 100 may extract the MPD, the MPD information table or the MPD link information table from the IP datagram including the MPD, the MPD information table or the MPD link information table.

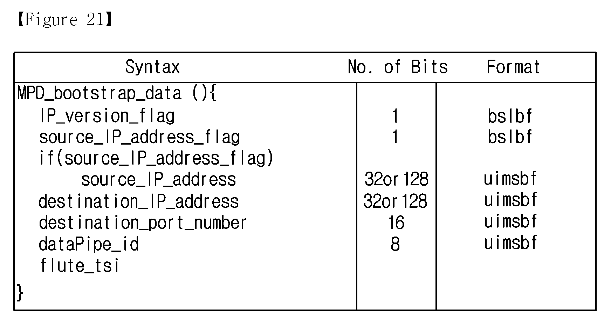

Fig. 21 illustrates the syntax of the MPD bootstrap_data in the case where the MPD descriptor includes information on a session-based transport protocol session such as FLUTE or ALC/LCT for transmitting the MPD.

In the case where the media content presentation information is transmitted via a session-based transport protocol session such as FLUTE or ACL/LCT, the bootstrap_data includes an IP_version_flag field, a source_IP_address_flag field, a source_IP_address field, a destination_IP_address field, a destination_port_number field, a dataPipe_id field, and a flute_tsi field. The IP_version_flag field indicates a version of an IP address format. The source_IP_address_flag field indicates whether a source IP address of a FLUTE session for transmitting the MPD is included. The destination_IP_address field indicates an IP address of the FLUTE session for transmitting the MPD. The destination_port_number field indicates a port number of the FLUTE session for transmitting the MPD. The dataPipe_id field indicates an identifier of a data transmission channel of a physical layer. The flute_tsi field indicates an identifier of the FLUTE session for transmitting the MPD. The broadcast receiving device 100 may extract the MPD, the MPD information table or the MPD link information table using the dataPipe_id field, the destination_IP_address field, and the destination_port_number field, and the flute_tsi field. In detail, the broadcast receiving device 100 may identify the data transmission channel of the physical channel according to a value of the dataPipe_id field, and may extract the MPD, the MPD information table or the MPD link information table using the flute_tsi field, the destination_IP_address field, and the destination_port_number field.

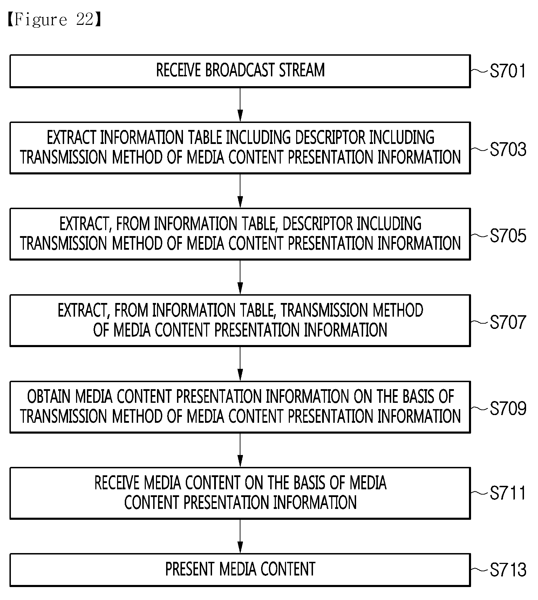

Fig. 22 is a flowchart illustrating an operation of receiving, by a broadcast receiving device, the media content presentation information in the case where a method of transmitting the media content presentation information is added to the broadcast information signaling information table so as to be transmitted.

The broadcast receiving device 100 receives a broadcast stream via the broadcast receiving unit 150 (S701).

The broadcast receiving device 100 extracts, via the control unit, an information table including a descriptor including the method of transmitting the media content presentation information (S703). As described above, the information table may be one of a program specific information (PSI) table defined in the ISO/IEC 13818-1 standard, a system information (SI) table defined in the ETSI EN 300 468 standard, and a program and system information protocol (PSIP) table defined in the ATSC standard. In particular, the information table may be an information table for signaling information on broadcast content. The information on broadcast content may be information on a broadcasting service, information on an elementary stream, or information on an event. In detail, the information table may be one of a terrestrial virtual channel table (TVCT) and an event information table (EIT) among tables defined in A/65 that is one of ATSC standards, a service map table (SMT) among tables defined in A/153, a service description table (SDT) and an EIT defined in the ETSI EN 300 468 standard, and a program map table (PMT) defined in the ISO/IEC 13818-1 standard.

The broadcast receiving device 100 extracts, via the control unit 110, the descriptor including the method of transmitting the media content presentation information from the information table (S705).

The broadcast receiving device 100 extracts, via the control unit 110, the method of transmitting the media content presentation information from the information table (S707). The descriptor may include a transport_mode element indicating a specific method of transmitting the media content presentation information or the media content presentation information table. The descriptor may include a bootstrap_data element including specific transmission information according to the method of transmitting the media content presentation information or the media content presentation information table. Here, the broadcast receiving device 100 may identify the method of transmitting the media content presentation information or the media content presentation information table on the basis of the transport_mode element, and may extract transmission information of the media content presentation information or the media content presentation information table on the basis of the bootstrap_data element. Here, as described above, the method of transmitting the media content presentation information may correspond to one of the case where the descriptor directly includes the media content presentation information, the case where the descriptor directly includes the media content presentation information table, the case where the media content presentation information or the media content presentation information table is downloadable via a link included in the descriptor, the case where a packet that is different from a packet that includes the descriptor includes the media content presentation information or the media content presentation information link, the case where an additional broadcast stream includes the media content presentation information or the media content presentation information link, the case where the bootstrap_data element includes an identifier of a broadcast stream including the media content presentation information and a packet identifier, the case where an IP datagram includes the media content presentation information or the media content presentation information table, and the case where the media content presentation information is transmitted via a session-based transport protocol.

The broadcast receiving device 100 obtains, via the control unit 110, the media content presentation information on the basis of the method of transmitting the media content presentation information or the media content presentation information table (S709). Here, the broadcast receiving device 100 may obtain the media content presentation information table via the control unit 110. The broadcast receiving device 100 may extract the media content presentation information from the media content presentation information table via the control unit 110.

The broadcast receiving device 100 receives media content via the IP transmitting/receiving unit 130 on the basis of the media content presentation information (S711).

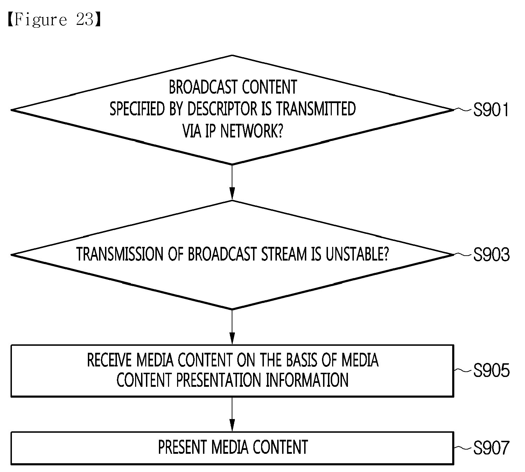

The broadcast receiving device 100 presents the media content via the control unit 110 (S713). In detail, the broadcast receiving device 100 may present the media content on the basis of the media content presentation information via the control unit 110. Here, in the case where broadcast content is transmitted via not only a broadcasting network but also an IP network, the media content may be presented on the basis of whether transmission of a broadcast stream is stable. This configuration will be described with reference to Fig. 23.

Fig. 23 is a flowchart illustrating an operation of presenting, by a broadcast receiving device, media content on the basis of whether transmission of a broadcast stream is stable in the case where broadcast content is transmitted via not only a broadcasting network but also an IP network.

The broadcast receiving device 100 determines, via the control unit 110, whether broadcast content specified by a descriptor is transmitted via not only a broadcasting network but also an IP network (S901). In detail, the broadcast receiving device 100 may determine, via the control unit 110, whether a value of the simulcast_flag element included in the descriptor is 1.

In the case where the broadcast content specified by the descriptor is transmitted via the IP network, the broadcast receiving device 100 determines, via the control unit 110, whether transmission of a broadcast stream is stable (S903). In detail, the broadcast receiving device 100 may determine, via the control unit 110, whether a strength of a signal of the broadcast stream transmitted via the broadcasting network is lower than a certain reference level. In another specific embodiment, the broadcast receiving device 100 may determine, via the control unit 110, whether presentation interruption of the broadcast content occurs.

If the transmission of the broadcast stream is unstable, the broadcast receiving device 100 receives the media content via the IP transmitting/receiving unit 130 on the basis of the media content presentation information (S905).

The broadcast receiving device 100 presents the media content via the control unit 110 (S907). In detail, the broadcast receiving device 100 may present the media content on the basis of the media content presentation information via the control unit 110.

In general, a time of presenting broadcast content on a screen is determined according to a program clock reference such as 90 KHz. However, a time of presenting, on a screen, media content transmitted via an IP network is determined according to a timescale assigned at the moment of generating the content. Therefore, the broadcast receiving device 100 capable of presenting both broadcast content and media content is required to synchronize the screen presentation time of the broadcast content with that of the media content transmitted via the IP network. In particular, in the case of presenting media content transmitted via the IP network which is the same as broadcast content transmitted via the broadcasting network after presenting the broadcast content as described above with reference to Fig. 21, the broadcast receiving device 100 is required to synchronize presentation times. Furthermore, the broadcast receiving device 100 is required to synchronize presentation times so that various additional services received via a broadcast stream is provided in synchronization with media content.

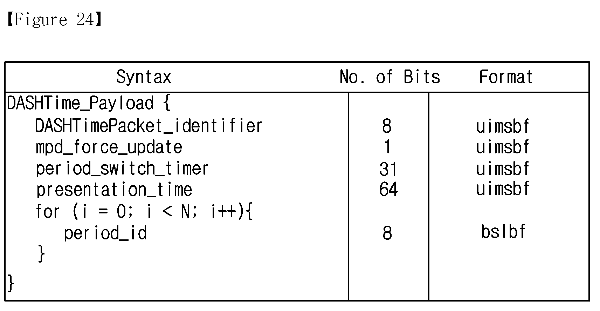

Described below with reference to Figs. 24 to 27 is a method of synchronizing screen presentation times between broadcast content and media content transmitted via an IP network.

A content provider or a broadcaster may add information for synchronizing media content to an additional synchronization information packet of a broadcast stream to transmit the information for synchronizing media content. This operation of adding the information for synchronizing media content to the additional synchronization information packet of the broadcast stream to transmit the information for synchronizing media content is described below with reference to Fig. 24.

The synchronization information packet may include a force_update element indicating whether the media content presentation information is required to be updated prior to presentation time synchronization.

Furthermore, the synchronization information packet may include a switch_timer indicating a remaining time from a broadcast stream reference time of the synchronization information packet to a start time of a presentation interval of media content to be synchronized. Here, the broadcast stream reference time is set so that a plurality of elementary streams included in a broadcast stream are synchronized with one timeline. Here, the synchronization information packet may include the broadcast stream reference time of the synchronization information packet. In the case where the broadcast stream complies with the MPEG-2 TS standard, the broadcast stream reference time of the synchronization information packet may be a PTS. In the case where a value of the switch_timer element is 0, the switch_timer element may indicate that the presentation interval of the media content to be synchronized is active and the media content is required to be synchronized immediately. In the case where the value of the switch_timer element is not 0, the switch_timer element may indicate that the presentation interval of the media content to be synchronized is not active.

Furthermore, the synchronization information packet may include a presentation_time element indicating an own presentation time of the media content to be synchronized with broadcast content. Here, a synchronized presentation time of broadcast content received before a new synchronization information packet is received may be obtained using a value of the presentation_time element. This operation is performed using the following equation.

$$MPT = (PT - PT0)/RC + (presentation\_time - TimeOffset)/timescale$$

In the equation, MPT denotes the synchronized presentation time of broadcast content received before a new synchronization information packet is received, PT0 denotes the broadcast stream reference time of the synchronization information packet, PT denotes the broadcast stream reference time of the broadcast content received before the new synchronization information packet is received, RC denotes the reference clock of a broadcast stream, presentation_time denotes the own presentation time of media content which is a value of the presentation_time element, TimeOffset denotes a media content presentation start time of a presentation interval of the media content to be synchronized by the synchronization information packet, and timescale denotes a timescale of the own presentation time of the media content.

Furthermore, the packet including the information for synchronizing media content may include a period_id element indicating an identifier of the presentation interval of the media content to be synchronized. In a specific embodiment, in the case where media content is transmitted according to the MPEG-DASH standard, the period_id element may include an ID of a period element of the MPD and a URL of the MPD.

In the case where a broadcast stream is transmitted according to the MPEG-2 TS standard, the synchronization information packet may be transmitted as a packet elementary stream (PES) packet. Here, the synchronization information packet may be a private stream having a stream id value of 0xBD. Furthermore, the synchronization information packet having a data_alignment_indicator value of 1 may match a start of a payload of a PES packet.

Fig. 24 illustrates a syntax of a broadcast stream packet including synchronization information of media content transmitted via an IP network according to the MPEG-DASH standard.

In the example of Fig. 24, media content is transmitted according to the MPEG-DASH standard. Therefore, the synchronization information packet is referred to as a DASHTime packet.

The DASHTime packet includes a DASHTimePacket_identifier field, an mpd_force_update field, a period_switch_timer field, a presentation_time field, and a period_id field.

The DASHTimePacket_identifier field indicates an identifier for identifying the DASHTime packet.

The mpd_force_update field indicates that the MPD is required to be updated with respect to the synchronization information packet prior to presentation time synchronization.

The period_switch_timer field indicates a remaining time from the broadcast stream reference time of the DASHTime packet to a start time of the period element of the MPD to be synchronized. In the case where a value of the switch_timer field is 0, the switch_timer field may indicate that a period identified by the period_id field is currently active and media content is required to be synchronized immediately. In the case where the value of the switch_timer field is not 0, the switch_timer field may indicate that the period identified by the period_id field is not currently active.

The presentation_time field indicates an own presentation time of media content transmitted via an IP network which is to be synchronized with broadcast content. Here, a synchronized presentation time of broadcast content received before a new DASHTime packet is received may be obtained using a value of the presentation_time field. This operation is performed using the following equation.

$$MPT = (PT - PT0)/RC + (presentation\_time - TimeOffset)/SegmentBase.timescale$$

In the equation, MPT denotes the synchronized presentation time of broadcast content received before a new DASHTime packet is received, PT0 denotes the broadcast stream reference time of the synchronization information packet, PT denotes the broadcast stream reference time of the broadcast content received before the new DASHTime packet is received, RC denotes the reference clock of a broadcast stream, presentation_time denotes the own presentation time of media content which is a value of the presentation_time field, TimeOffset denotes a media content presentation start time of a presentation interval of the media content to be synchronized by the DASHTime packet, and SegmentBase.timescale denotes a value of the timescale element of the MPD.

The period_id field enables identification of the period element of the MPD, and includes an ID of the period element of the MPD and a URL of the MPD. The broadcast receiving device 100 may identify media content to be synchronized and the period element that is a presentation interval of the media content, using the period_id field.

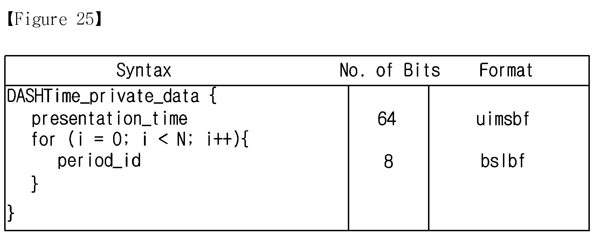

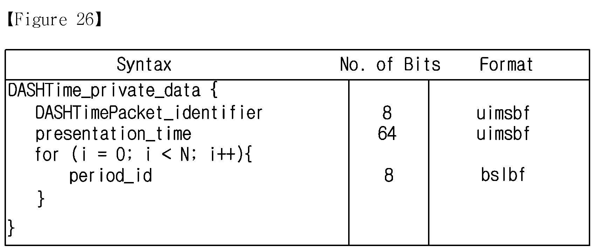

In the case where synchronization information is transmitted via an additional synchronization information packet as described above with reference to Fig. 24, the broadcast receiving device 100 is required to receive an additional packet to synchronize media content with broadcast content. In general, to overcome this limitation, a header of a packet including broadcast content such as a video or an audio includes a broadcast content reference time for synchronization between elementary streams. For example, the header of a packet of a broadcast stream according to the MPEG-2 TS standard includes a PTS. Therefore, if the synchronization information is added to the header of a packet including broadcast content such as a video or an audio so as to be transmitted, the broadcast receiving device 100 may efficiently synchronize media content with broadcast content. This configuration will be described in detail with reference to Figs. 25 and 26.

The header of a packet including broadcast content such as a video or an audio may include a presentation_time element indicating an own presentation time of media content to be synchronized with the broadcast content. Furthermore, the header may include a period_id element indicating an identifier of a presentation interval of media content to be synchronized. The header may also include an id element indicating that information for synchronization between media content and broadcast content is included.

Fig. 25 illustrates a syntax of the synchronization information added to the header of a packet including broadcast content such as a video or an audio according to an embodiment.

Fig. 26 illustrates the syntax of the synchronization information added to the header of a packet including broadcast content such as a video or an audio according to another embodiment.

In the examples of Figs. 25 and 26, the header of a packet including broadcast content such as a video or an audio includes information for synchronization with media content transmitted according to the MPEG-DASH standard. Here, the information for synchronization is referred to as DASHTime_private_data. The DASHTime_private_data includes a presentation_time field and a period_id field. The presentation_time field indicates an own presentation time of media content synchronized with broadcast content. The period_id field enables identification of the period element of the MPD, and includes an ID of the period element of the MPD and a URL of the MPD. In the example of Fig. 26, the DASHTime_private_data further includes an ID element indicating that the DASHTime_private_data includes information for synchronization between media content and broadcast content.

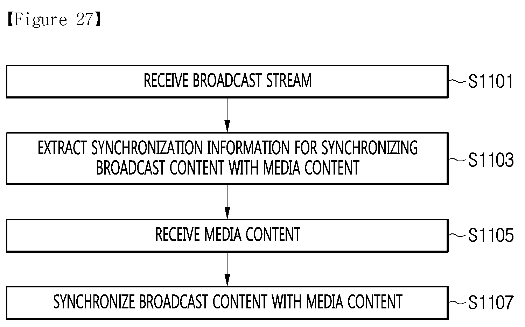

Fig. 27 is a flowchart illustrating an operation of synchronizing, by a broadcast receiving device, broadcast content with media content according to an embodiment.

The broadcast receiving device 100 receives a broadcast stream via the broadcast receiving unit 150 (S1101).

The broadcast receiving device 100 extracts, via the control unit 110, synchronization information for synchronizing broadcast content with media content transmitted via an IP network (S1103). In a specific embodiment, the broadcast receiving device 100 may extract, via the control unit 110, the synchronization information from a synchronization information packet. In another specific embodiment, the broadcast receiving device 100 may extract, via the control unit 110, the synchronization information from the header of a packet including broadcast content such as a video or an audio.

The broadcast receiving device 100 receives media content via the IP transmitting/receiving unit 130 (S1105).

The broadcast receiving device 100 synchronizes, via the control unit 110, the media content with the broadcast content.

In the case where the broadcast receiving device 100 receives not only broadcast content but also media content via an IP network, the broadcast receiving device 100 may be required to access the broadcast content on the basis of presentation information of the media content so as to improve efficiency of interworking between the broadcast content and the media content.

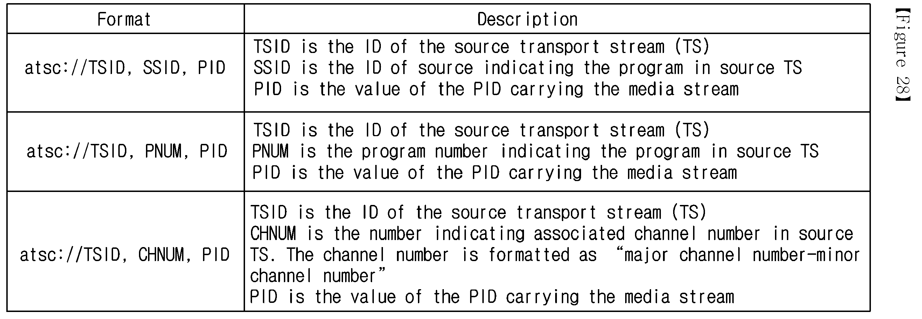

Described below with reference to Figs. 28 to 30 is a method of adding information on broadcast content to the media content presentation information to transmit the information on broadcast content.

The media content presentation information may include information for identifying broadcast content so that the broadcast receiving device 100 may access the broadcast content on the basis of the media content presentation information. In detail, the media content presentation information may include an identifier for identifying a broadcast stream including the broadcast content. For example, in the case where the broadcast content is transmitted according to the MPEG-2 TS standard, the media content presentation information may include a TSID. Furthermore, the media content presentation information may include an identifier for identifying a broadcasting service including the broadcast content. For example, in the case where the broadcast content is transmitted according to the MPEG-2 TS standard, the media content presentation information may include a program number. In the case where the broadcast content is transmitted according to the ATSC standard, the media content presentation information may include a source id and a channel number of a virtual channel. In the case where the broadcast content is transmitted according to a DVB standard, the media content presentation information may include a service id. Furthermore, the media content presentation information may include an identifier for identifying a packet including the broadcast content. For example, in the case where the broadcast content is transmitted according to the MPEG-2 TS standard, the media content presentation information may include a PID.

In a specific embodiment, the media content presentation information may include an identifier obtained by combining the identifier for identifying a broadcast stream including broadcast content, the identifier for identifying a broadcast service including broadcast content, and the identifier for identifying a packet including broadcast content.

Fig. 28 illustrates a format of information for identifying broadcast content included in the media content presentation information in the case where the broadcast content is transmitted according to the ATSC standard.

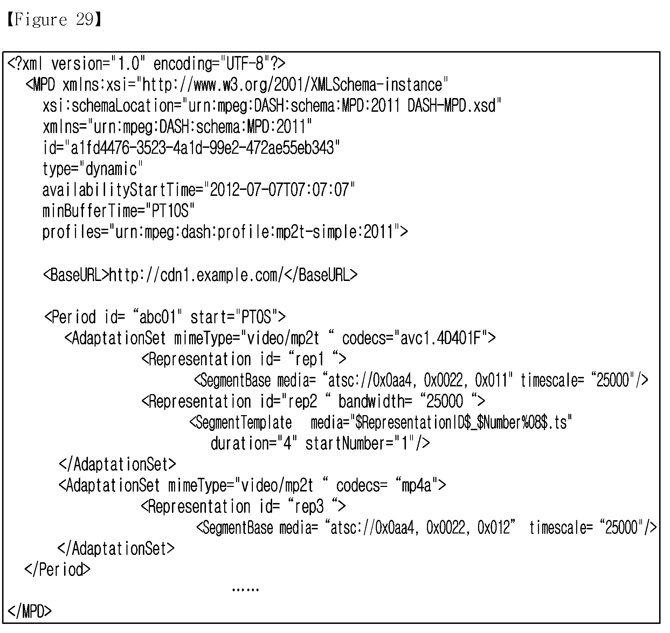

Fig. 29 illustrates an example of the MPD of MPEG-DASH including information for identifying broadcast content transmitted according to the ATSC standard.

In the examples of Figs. 28 and 29, the information for identifying broadcast content may be a combination of a TSID for identifying a transport stream, an SSID for identifying a source of an elementary stream, and a PID for identifying a packet.

The information for identifying broadcast content may be a combination of a TSID for identifying a transport stream, a PNUM for identifying a program stream, and a PID for identifying a packet.

The information for identifying broadcast content may be a combination of a TSID for identifying a transport stream, a CHNUM for identifying a virtual stream, and a PID for identifying a packet. Here, the CHUM for identifying a virtual channel may have a format in which a major channel number and a minor channel number are connected to each other by "-".

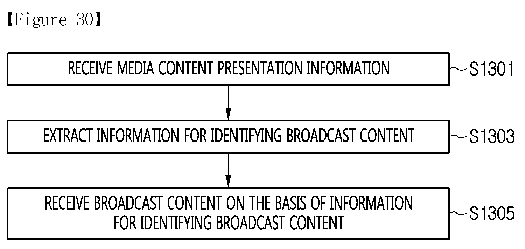

Fig. 30 is a flowchart illustrating an operation of receiving, by a broadcast receiving device, broadcast content on the basis of the media content presentation information.

The broadcast receiving device 100 receives the media content presentation information via the IP transmitting/receiving unit 130 (S1303).

The broadcast receiving device 100 extracts, via the control unit 110, information for identifying broadcast content (S1303).

The broadcast receiving device 100 receives, via the broadcast receiving unit 150 and the control unit 110, the broadcast content on the basis of the information for identifying the broadcast content (S1305). In detail, the broadcast receiving device 100 receives a broadcast stream via the broadcast receiving unit 150. Here, the broadcast receiving device 100 may receive the broadcast stream on the basis of a broadcast stream identifier included in the information for identifying the broadcast content. The broadcast receiving device 100 extracts, from the broadcast stream, the broadcast content on the basis of the information for identifying the broadcast content. Here, the broadcast receiving device 100 may extract, from the broadcast stream, the broadcast content on the basis of a broadcast service identifier included in the information for identifying the broadcast content.

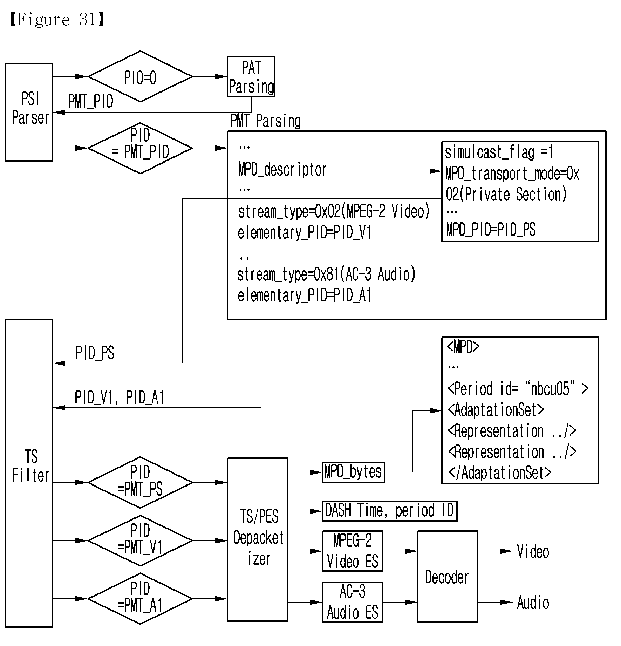

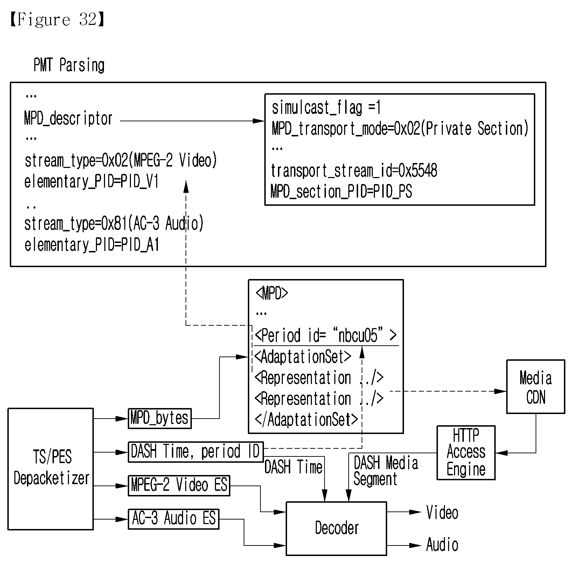

Described below with reference to Figs. 31 and 32 is a method of receiving, by a broadcast receiving device, the media content presentation information via a broadcasting network in relation to the above-mentioned examples. Furthermore, an operation of synchronizing, by the broadcast receiving device, broadcast content with media content will be described in detail.

Fig. 31 is a block diagram illustrating that the broadcast receiving device receives the MPD of MPEG-DASH via a broadcasting network for transmitting a broadcast stream according to the MPEG-2 TS standard.

According to the embodiment of Fig. 31, the control unit 110 of the broadcast receiving device 100 includes a PSI parser, a TS filter, a TS/PES depacketizer, and a decoder.

The TS filter extracts, from a broadcast stream, a packet having a specific PID.

The PSI parser parses a PSI table such as a program association table (PAT) or a program map table (PMT) to extract signaling information. In a specific example, the PSI parser may extract an MPD_descriptor included in the PMT.

The TS/PES depacketizer extracts payload data from a TS/PES packet. In a specific embodiment, in the case where the MPD is transmitted as an additional information table in a broadcast stream, the TS/PES depacketizer may extract the MPD from the additional information table on the basis of the MPD_descriptor. In detail, the TS/PES depacketizer may extract the MPD from an information table included in a packet corresponding to a PID included in the MPD_descriptor. Furthermore, the TS/PES depacketizer extracts a video elementary stream and an audio elementary stream from the TS/PES packet.

The decoder decodes a video or an audio.

Fig. 32 is a block diagram illustrating that the broadcast receiving device synchronizes broadcast content of a broadcast stream transmitted according to the MPEG-2 TS standard with media content transmitted via an IP network.

According to the embodiment of Fig. 32, the control unit 110 of the broadcast receiving device 100 includes a TS/PES depacketizer and a decoder.

The TS/PES depacketizer extracts payload data from a TS/PES packet. In a specific example, in the case where the MPD is transmitted as an additional information table in a broadcast stream, the MPD may be extracted from the additional information table on the basis of the MPD_descriptor. In detail, the MPD may be extracted from an information table included in a packet corresponding to a PID included in the MPD_descriptor. Furthermore, the TS/PES depacketizer extracts, from the TS/PES packet, synchronization information for synchronizing media content with broadcast content. Here, the synchronization information may include a presentation time of media content, an identifier for identifying a period element of the MPD, and an MPD URL. Furthermore, the TS/PES depacketizer extracts a video elementary stream and an audio elementary stream from the TS/PES packet.

The IP transmitting/receiving unit 130 receives media content from a CDN server on the basis of the MPD.

The decoder synchronizes the received media content on the basis of the synchronization information and decodes the media content.

The above-mentioned features, structures or effects are included in at least one embodiment, but are not necessarily limited to only one embodiment. Furthermore, the features, structures or effects of each embodiment may be combined or modified by those skilled in the art so as to be implemented for other embodiments. Therefore, such combination or modification should be construed as falling within the scope of the present disclosure.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

**Claims**

1. A method for operating a broadcast receiving device, the method comprising:

    receiving a first broadcast stream comprising broadcast content via a broadcasting network other than an IP network;
    receiving media content presentation information for media content transmitted via the IP network on the basis of the first broadcast stream;
    receiving the media content; and
    presenting the media content on the basis of the media content presentation information.

2. The method according to claim 1,
    wherein the first broadcast stream comprises a broadcast information signaling table comprising information on the broadcast content,
    wherein the broadcast information signaling table comprises a first element indicating a transmission method of the media content presentation information and a second element indicating transmission information corresponding to the transmission method,
    wherein the receiving the media content presentation information comprises receiving the media content presentation information on the basis of the first element and the second element.

3. The method according to claim 2, wherein the broadcast information signaling table is one of a program map table (PMT), a service map table (SMT), and a terrestrial virtual channel table (TVCT).

4. The method according to claim 2,
wherein the first element indicates that the media content presentation information is transmitted on a second broadcast stream different from the first broadcast stream,
wherein the second element comprises an identifier of the second broadcast stream.

5. The method according to claim 2,
wherein the first element indicates that the media content presentation information is transmitted by a session-based transport protocol,
wherein the second element comprises an identifier of a session of the session-based transport protocol.

6. The method according to claim 2,
wherein the first element indicates that the media content presentation information is added to an information table in the first broadcast stream so as to be transmitted,
wherein the second element comprises an identifier of a packet comprising the information table.

7. The method according to claim 2,
wherein the first element indicates that the media content presentation information is added to an Internet protocol (IP) datagram in the first broadcast stream so as to be transmitted,
wherein the second element comprises an identifier of a data transmission channel of a physical layer for transmitting the IP datagram and a port number and an IP address of the IP datagram.

8. The method according to claim 1, comprising:

extracting, from the broadcast stream, synchronization information for synchronizing the broadcast content with the media content,
wherein the presenting the media content comprises synchronizing the media content with the broadcast content on the basis of the synchronization information.

9. The method according to claim 8, wherein the synchronization information comprises a first element indicating an own presentation time of the media content and a second element indicating an identifier of a presentation interval of the media content.

10. The method according to claim 9, wherein the synchronization information comprises a third element indicating a remaining time from a broadcast stream reference time of the packet comprising the synchronization information to a start time of the presentation interval of the media content to be synchronized.

11. The method according to claim 10,
wherein the synchronization information comprises a fourth element indicating whether the media content presentation information is required to be updated prior to synchronization,
wherein the synchronizing the media content with the broadcast content comprises updating the presentation information on the basis of a value of the fourth element.

12. The method according to claim 8, wherein the synchronization information is added to a header of a packet comprising a video or an audio included in the broadcast content.

13. The method according to claim 1,
wherein the broadcast stream comprises an IP datagram,
wherein the IP datagram comprises the media content presentation information,
wherein the receiving the media content presentation information comprises extracting the media content presentation information from the IP datagram.

14. The method according to claim 1,
wherein the first broadcast stream comprises an information table,

wherein the information table comprises the media content presentation information and an element indicating whether the media content presentation information is compressed,

wherein the receiving the media content presentation information comprises extracting the media content presentation information from the information table on the basis of whether the media content presentation information is compressed.

15. A broadcast receiving device comprising:

a broadcast receiving unit configured to receive a first broadcast stream comprising broadcast content via a broadcasting network other than an IP network;

an IP transmitting/receiving unit configured to receive media content transmitted via the IP network; and

a control unit configured to receive media content presentation information for the media content on the basis of the first broadcast stream, and present the media content on the basis of the media content presentation information.

16. The broadcast receiving device according to claim 15,

wherein the first broadcast stream comprises a broadcast information signaling table comprising information on the broadcast content,

wherein the broadcast information signaling table comprises a first element indicating a transmission method of the media content presentation information and a second element indicating transmission information corresponding to the transmission method,

wherein the control unit receives the media content presentation information on the basis of the first element and the second element.

17. The broadcast receiving device according to claim 16, wherein the broadcast information signaling table is one of a program map table (PMT), a service map table (SMT), and a terrestrial virtual channel table (TVCT).

18. The broadcast receiving device according to claim 16,

wherein the first element indicates that the media content presentation information is transmitted on a second broadcast stream different from the first broadcast stream,

wherein the second element comprises an identifier of the second broadcast stream.

19. The broadcast receiving device according to claim 16,

wherein the first element indicates that the media content presentation information is transmitted by a session-based transport protocol,

wherein the second element comprises an identifier of a session of the session-based transport protocol.

20. A method for operating a broadcast transmitting device, the method comprising:

inserting broadcast content into a broadcast stream;

inserting, into the broadcast stream, media content presentation information for media content transmitted via an IP network; and

transmitting the broadcast stream via a broadcasting network other than an Internet protocol (IP) network.

【Figure 1】

【Figure 2】

【Figure 3】

```
┌────────────────────────────────────────────────────────────────────────────┐
│ Media Presentation Description (MPD)                                         │
│  ┌──────────────────────────────────────────────────────────────────────┐   │
│  │ Period                                                                │   │
│  │  ┌────────────────────────────────────────────────────────────────┐  │   │
│  │  │ Adaptation Set                                                  │  │   │
│  │  │  ┌──────────────┬────────────────────────┬──────────────────┐  │  │   │
│  │  │  │ Representation│ Sub-Representation      │ Sub-Representation│  │  │   │
│  │  │  │  ┌───────────┐│  ┌──────────┐           │   ┌──────────┐   │  │  │   │
│  │  │  │  │ Segment   ││  │ Sub-     │ ......... │   │ Sub-     │   │  │  │   │
│  │  │  │  │           ││  │ Segment  │   ....    │   │ Segment  │   │  │  │   │
│  │  │  │  └───────────┘│  └──────────┘           │   └──────────┘   │  │  │   │
│  │  │  │    .......... │                         │                  │  │  │   │
│  │  │  │  ┌───────────┐│                         │                  │  │  │   │
│  │  │  │  │ Segment   ││                         │                  │  │  │   │
│  │  │  │  └───────────┘│                         │                  │  │  │   │
│  │  │  └──────────────┴────────────────────────┴──────────────────┘  │  │   │
│  │  │        ..........                                               │  │   │
│  │  │  ┌────────────────────────────────────────────────────────────┐│  │   │
│  │  │  │ Representation                                             ││  │   │
│  │  │  └────────────────────────────────────────────────────────────┘│  │   │
│  │  └────────────────────────────────────────────────────────────────┘  │   │
│  │          ..........                                                   │   │
│  │  ┌────────────────────────────────────────────────────────────────┐  │   │
│  │  │ Adaptation Set                                                  │  │   │
│  │  │                                                                 │  │   │
│  │  └────────────────────────────────────────────────────────────────┘  │   │
│  └──────────────────────────────────────────────────────────────────────┘   │
│            ..........                                                         │
│  ┌──────────────────────────────────────────────────────────────────────┐   │
│  │ Period                                                                │   │
│  │                                                                       │   │
│  └──────────────────────────────────────────────────────────────────────┘   │
└────────────────────────────────────────────────────────────────────────────┘
```

【Figure 4】

```
<!-- MPD Type -->
<xs:complexType name="MPDtype">
    <xs:sequence>
        <xs:element name="ProgramInformation" type="ProgramInformationType" minOccurs="0" maxOccurs=
"unbounded"/>
        <xs:element name="BaseURL" type="BaseURLType" minOccurs="0" maxOccurs="unbounded"/>
        <xs:element name="Location" type="xs:anyURI" minOccurs="0" maxOccurs="unbounded"/>
        <xs:element name="Period" type="PeriodType" maxOccurs="unbounded"/>
        <xs:element name="Metrics" type="MetricsType" minOccurs="0" maxOccurs="unbounded"/>
        <xs:any namespace="##other" processContents="lax" minOccurs="0" maxOccurs="unbounded"/>
    </xs:sequence>
    <xs:attribute name="id" type="xs:string"/>
    <xs:attribute name="profiles" type="xs:string" use="required"/>
    <xs:attribute name="type" type="PresentationType" default="static"/>
    <xs:attribute name="availabilityStartTime" type="xs:dateTime"/>
    <xs:attribute name="availabilityEndTime" type="xs:dateTime"/>
    <xs:attribute name="mediaPresentationDuration" type="xs:duration"/>
    <xs:attribute name="minimumUpdatePeriod" type="xs:duration"/>
    <xs:attribute name="minBufferTime" type="xs:duration" use="required"/>
    <xs:attribute name="timeShiftBufferDepth" type="xs:duration"/>
    <xs:attribute name="suggestedPresentationDelay" type="xs:duration"/>
    <xs:attribute name="maxSegmentDuration" type="xs:duration"/>
    <xs:attribute name="maxSubsegmentDuration" type="xs:duration"/>
    <xs:anyAttribute namespace="##other" processContents="lax"/>
</xs:complexType>


<!-- Presentation Type enumeration -->
<xs:simpleType name="PresentationType">
    <xs:restriction base="xs:string">
        <xs:enumeration value="static"/>
        <xs:enumeration value="dynamic"/>
    </xs:restriction>
</xs:simpleType>
```

【Figure 5】

```
<!-- Period -->
<xs:complexType name="PeriodType">
    <xs:sequence>
        <xs:element name="BaseURL" type="BaseURLType" minOccurs="0" maxOccurs="unbounded"/>
        <xs:element name="SegmentBase" type="SegmentBaseType" minOccurs="0"/>
        <xs:element name="SegmentList" type="SegmentListType" minOccurs="0"/>
        <xs:element name="SegmentTemplate" type="SegmentTemplateType" minOccurs="0"/>
        <xs:element name="AdaptationSet" type="AdaptationSetType" minOccurs="0" maxOccurs="unbounded"/>
        <xs:element name="Subset" type="SubsetType" minOccurs="0" maxOccurs="unbounded"/>
        <xs:any namespace="##other" processContents="lax" minOccurs="0" maxOccurs="unbounded"/>
    </xs:sequence>
    <xs:attribute ref="xlink:href"/>
    <xs:attribute ref="xlink:actuate" default="onRequest"/>
    <xs:attribute name="id" type="xs:string" />
    <xs:attribute name="start" type="xs:duration"/>
    <xs:attribute name="duration" type="xs:duration"/>
    <xs:attribute name="bitstreamSwitching" type="xs:boolean" default="false"/>
    <xs:anyAttribute namespace="##other" processContents="lax"/>
</xs:complexType>
```

【Figure 6】

| RECEIVE MEDIA CONTENT PRESENTATION INFORMATION | ~S101 |

↓

| RECEIVE MEDIA CONTENT | ~S103 |

↓

| PRESENT MEDIA CONTENT | ~S105 |

【Figure 7】

| Syntax | No.Bits | Format |
|---|---|---|
| MPD_section () { | | |
| table_id | 8 | 'OxFA' |
| section_syntax_indicator | 1 | '0' |
| private_indicator | 1 | '1' |
| reserved | 2 | '11' |
| private_section_length | 12 | uimsbf |
| table_id_extension{ | | |
| protocol_version | 8 | uimsbf |
| sequence_number | 8 | uimsbf |
| } | | |
| reserved | 2 | '11' |
| mpd_data_version | 5 | uimsbf |
| current_next_indicator | 1 | '1' |
| section_number | 8 | uimsbf |
| last_section_number | 8 | uimsbf |
| MPD_id_length/*M*/ | 16 | uimsbf |
| MPD_id_bytes() | 8*M | |
| reserved | 2 | '11' |
| MPD_coding | 2 | uimsbf |
| MPD_byte_length/*N*/ | 12 | uimsbf |
| MPD_bytes() | 8*N | |
| } | | |

【Figure 8】

| | |
|---|---|
| RECEIVE BROADCAST STREAM | ~S301 |

↓

| | |
|---|---|
| EXTRACT MEDIA CONTENT PRESENTATION INFORMATION TABLE FROM BROADCAST STREAM | ~S303 |

↓

| | |
|---|---|
| EXTRACT MEDIA CONTENT PRESENTATION INFORMATION ON THE BASIS OF MEDIA CONTENT PRESENTATION INFORMATION TABLE | ~S305 |

↓

| | |
|---|---|
| RECEIVE MEDIA CONTENT ON THE BASIS OF MEDIA CONTENT PRESENTATION INFORMATION | ~S307 |

↓

| | |
|---|---|
| PRESENT MEDIA CONTENT | ~S309 |

【Figure 9】

| Syntax | No.Bits | Format |
|---|---|---|
| MPD_URL_section () { | | |
|     table_id | 8 | 'OxFA' |
|     section_syntax_indicator | 1 | '0' |
|     private_indicator | 1 | '1' |
|     reserved | 2 | '11' |
|     private_section_length | 12 | uimsbf |
|     table_id_extension{ | | |
|       protocol_version | 8 | uimsbf |
|       sequence_number | 8 | uimsbf |
|     } | | |
|     reserved | 2 | '11' |
|     mpd_data_version | 5 | uimsbf |
|     current_next_indicator | 1 | '1' |
|     section_number | 8 | uimsbf |
|     last_section_number | 8 | uimsbf |
|     MPD_id_length/*M*/ | 16 | uimsbf |
|     MPD_id_bytes() | 8*M | |
|     reserved | 4 | '1111' |
|     MPD_URL_length/*N*/ | 12 | uimsbf |
|     MPD_URL_bytes() | 8*N | |
| } | | |

【Figure 10】

```
┌─────────────────────────────────────────────────┐
│         RECEIVE BROADCAST STREAM                  │──S401
└─────────────────────────────────────────────────┘
                        │
                        ▼
┌─────────────────────────────────────────────────┐
│  EXTRACT, FROM BROADCAST STREAM, MEDIA CONTENT    │
│  PRESENTATION INFORMATION TABLE INCLUDING MEDIA   │──S403
│    CONTENT PRESENTATION INFORMATION LINK          │
└─────────────────────────────────────────────────┘
                        │
                        ▼
┌─────────────────────────────────────────────────┐
│   EXTRACT MEDIA CONTENT PRESENTATION LINK ON THE  │
│ BASIS OF MEDIA CONTENT PRESENTATION INFORMATION TABLE │──S405
└─────────────────────────────────────────────────┘
                        │
                        ▼
┌─────────────────────────────────────────────────┐
│  RECEIVE MEDIA CONTENT PRESENTATION INFORMATION ON │
│   THE BASIS OF MEDIA CONTENT PRESENTATION LINK    │──S407
└─────────────────────────────────────────────────┘
                        │
                        ▼
┌─────────────────────────────────────────────────┐
│    RECEIVE MEDIA CONTENT ON THE BASIS OF MEDIA    │
│       CONTENT PRESENTATION INFORMATION            │──S409
└─────────────────────────────────────────────────┘
                        │
                        ▼
┌─────────────────────────────────────────────────┐
│            PRESENT MEDIA CONTENT                  │──S411
└─────────────────────────────────────────────────┘
```

【Figure 11】

【Figure 12】

| Syntax | No.Bits | Format |
|---|---|---|
| MPD_UDP_datagram() {<br>    UDP_header<br>    reserved<br>    MPD_payload_type<br>    MPD_payload<br><br>} | <br><br>4<br>4<br>N | <br><br>'1111'<br>uimsbf |

【Figure 13】

| Syntax | No.Bits | Format |
|---|---|---|
| MPD_payload() {<br>    sequence_number<br>    MPD_coding<br>    MPD_byte_length /* N */<br>    MPD_bytes()<br>} | <br>8<br>2<br>14<br>8*N | <br>uimsbf<br>uimsbf<br>uimsbf |

【Figure 14】

| | |
|---|---|
| RECEIVE BROADCAST STREAM | ~S501 |
| EXTRACT IP DATAGRAM FROM BROADCAST STREAM | ~S503 |
| EXTRACT UDP DATAGRAM FROM IP DATAGRAM | ~S505 |
| EXTRACT MEDIA CONTENT PRESENTATION INFORMATION ON THE BASIS OF UDP DATAGRAM | ~S507 |
| RECEIVE MEDIA CONTENT ON THE BASIS OF MEDIA CONTENT PRESENTATION INFORMATION | ~S509 |
| PRESENT MEDIA CONTENT | ~S511 |

【Figure 15】

| Syntax | No. of Bits | Format |
|---|---|---|
| MPD_descriptor{ | | |
|     descriptor_tag | 8 | uimsbf |
|     descriptor_length | 8 | uimsbf |
|     simulcast_flag | 1 | uimsbf |
|     MPD_version | 4 | uimsbf |
|     MPD_transport_mode | 3 | uimsbf |
|     MPD_bootstrap_data(MPD_transport_mode) | | |
| } | | |

【Figure 16】

| Syntax | No. of Bits | Format |
|---|---|---|
| MPD_bootstrap_data (){<br>    MPD_data_length<br>    for (i = 0; i < MPD_data_length; i++){<br>        MPD_data_byte<br>    }<br>} | 8<br><br>1 | <br><br>bslbf |

【Figure 17】

| Syntax | No. of Bits | Format |
|---|---|---|
| MPD_bootstrap_data (){<br>　　MPD_URL_length<br>　　for (i = 0; i < MPD_URL_length; i++){<br>　　　　MPD_URL<br>　　}<br>} | 8<br><br>8 | bslbf |

【Figure 18】

| Syntax | No. of Bits | Format |
|---|---|---|
| MPD_bootstrap_data (){ | | |
| reserved | 3 | bslbf |
| MPD_pid | 13 | uimsbf |
| } | | |

【Figure 19】

| Syntax | No. of Bits | Format |
|---|---|---|
| MPD_bootstrap_data (){ | | |
| transport_stream_id | 16 | uimsbf |
| reserved | 3 | bslbf |
| MPD_pid | 13 | uimsbf |
| } | | |

【Figure 20】

| Syntax | No. of Bits | Format |
|---|---|---|
| MPD_bootstrap_data (){ | | |
|   IP_version_flag | 1 | bslbf |
|   source_IP_address_flag | 1 | bslbf |
|   if(source_IP_address_flag) | | |
|     source_IP_address | 32or128 | uimsbf |
|   destination_IP_address | 32or128 | uimsbf |
|   destination_port_number | 16 | uimsbf |
|   dataPipe_id | 8 | uimsbf |
| } | | |

【Figure 21】

| Syntax | No. of Bits | Format |
|---|---|---|
| MPD_bootstrap_data (){ | | |
|   IP_version_flag | 1 | bslbf |
|   source_IP_address_flag | 1 | bslbf |
|   if(source_IP_address_flag) | | |
|       source_IP_address | 32or128 | uimsbf |
|   destination_IP_address | 32or128 | uimsbf |
|   destination_port_number | 16 | uimsbf |
|   dataPipe_id | 8 | uimsbf |
|   flute_tsi | | |
| } | | |

【Figure 22】

RECEIVE BROADCAST STREAM ~S701

EXTRACT INFORMATION TABLE INCLUDING DESCRIPTOR INCLUDING
TRANSMISSION METHOD OF MEDIA CONTENT PRESENTATION INFORMATION ~S703

EXTRACT, FROM INFORMATION TABLE, DESCRIPTOR INCLUDING
TRANSMISSION METHOD OF MEDIA CONTENT PRESENTATION INFORMATION ~S705

EXTRACT, FROM INFORMATION TABLE, TRANSMISSION METHOD
OF MEDIA CONTENT PRESENTATION INFORMATION ~S707

OBTAIN MEDIA CONTENT PRESENTATION INFORMATION ON THE BASIS OF
TRANSMISSION METHOD OF MEDIA CONTENT PRESENTATION INFORMATION ~S709

RECEIVE MEDIA CONTENT ON THE BASIS OF MEDIA
CONTENT PRESENTATION INFORMATION ~S711

PRESENT MEDIA CONTENT ~S713

【Figure 23】

【Figure 24】

| Syntax | No. of Bits | Format |
|---|---|---|
| DASHTime_Payload { | | |
|   DASHTimePacket_identifier | 8 | uimsbf |
|   mpd_force_update | 1 | uimsbf |
|   period_switch_timer | 31 | uimsbf |
|   presentation_time | 64 | uimsbf |
|   for (i = 0; i < N; i++){ | | |
|     period_id | 8 | bslbf |
|   } | | |
| } | | |

【Figure 25】

| Syntax | No. of Bits | Format |
|---|---|---|
| DASHTime_private_data {<br>   presentation_time<br>   for (i = 0; i < N; i++){<br>     period_id<br>   }<br>} | 64<br><br>8 | uimsbf<br><br>bslbf |

【Figure 26】

| Syntax | No. of Bits | Format |
|---|---|---|
| DASHTime_private_data {<br>　DASHTimePacket_identifier<br>　presentation_time<br>　for (i = 0; i < N; i++){<br>　　period_id<br>　}<br>} | <br>8<br>64<br><br>8 | <br>uimsbf<br>uimsbf<br><br>bslbf |

【Figure 27】

```
┌─────────────────────────────────────────────────────┐
│              RECEIVE BROADCAST STREAM                 │─ S1101
└─────────────────────────────────────────────────────┘
                          │
                          ▼
┌─────────────────────────────────────────────────────┐
│ EXTRACT SYNCHRONIZATION INFORMATION FOR SYNCHRONIZING │─ S1103
│       BROADCAST CONTENT WITH MEDIA CONTENT            │
└─────────────────────────────────────────────────────┘
                          │
                          ▼
┌─────────────────────────────────────────────────────┐
│                RECEIVE MEDIA CONTENT                  │─ S1105
└─────────────────────────────────────────────────────┘
                          │
                          ▼
┌─────────────────────────────────────────────────────┐
│   SYNCHRONIZE BROADCAST CONTENT WITH MEDIA CONTENT    │─ S1107
└─────────────────────────────────────────────────────┘
```

[Figure 28]

EP 2 988 519 A1

| Format | Description |
|---|---|
| atsc://TSID, SSID, PID | TSID is the ID of the source transport stream (TS)<br>SSID is the ID of source indicating the program in source TS<br>PID is the value of the PID carrying the media stream |
| atsc://TSID, PNUM, PID | TSID is the ID of the source transport stream (TS)<br>PNUM is the program number indicating the program in source TS<br>PID is the value of the PID carrying the media stream |
| atsc://TSID, CHNUM, PID | TSID is the ID of the source transport stream (TS)<br>CHNUM is the number indicating associated channel number in source TS. The channel number is formatted as "major channel number-minor channel number"<br>PID is the value of the PID carrying the media stream |

【Figure 29】

```
<?xml version="1.0" encoding="UTF-8"?>
  <MPD xmlns:xsi="http://www.w3.org/2001/XMLSchema-instance"
    xsi:schemaLocation="urn:mpeg:DASH:schema:MPD:2011 DASH-MPD.xsd"
    xmlns="urn:mpeg:DASH:schema:MPD:2011"
    id="a1fd4476-3523-4a1d-99e2-472ae55eb343"
    type="dynamic"
    availabilityStartTime="2012-07-07T07:07:07"
    minBufferTime="PT10S"
    profiles="urn:mpeg:dash:profile:mp2t-simple:2011">

    <BaseURL>http://cdn1.example.com/</BaseURL>

    <Period id= "abc01" start="PT0S">
        <AdaptationSet mimeType="video/mp2t " codecs="avc1.4D401F">
                <Representation id= "rep1 ">
                        <SegmentBase media= "atsc://0x0aa4, 0x0022, 0x011" timescale= "25000"/>
                <Representation id="rep2 " bandwidth= "25000 ">
                        <SegmentTemplate   media="$RepresentationID$_$Number%08$.ts"
                            duration="4" startNumber="1"/>
        </AdaptationSet>
        <AdaptationSet mimeType="video/mp2t " codecs= "mp4a">
                <Representation id= "rep3 ">
                        <SegmentBase media= "atsc://0x0aa4, 0x0022, 0x012"  timescale= "25000"/>
        </AdaptationSet>
    </Period>
                        ......
</MPD>
```

【Figure 30】

| RECEIVE MEDIA CONTENT PRESENTATION INFORMATION | ~S1301 |

| EXTRACT INFORMATION FOR IDENTIFYING BROADCAST CONTENT | ~S1303 |

| RECEIVE BROADCAST CONTENT ON THE BASIS OF INFORMATION FOR IDENTIFYING BROADCAST CONTENT | ~S1305 |

【Figure 31】

【Figure 32】

PMT Parsing

```
...
MPD_descriptor ————————→     simulcast_flag =1
...                          MPD_transport_mode=0x02(Private Section)
stream_type=0x02(MPEG-2 Video)   ...
elementary_PID=PID_V1        transport_stream_id=0x5548
..                           MPD_section_PID=PID_PS
stream_type=0x81(AC-3 Audio)
elementary_PID=PID_A1
```

```
<MPD>
...
<Period id= "nbcu05" >
<AdaptationSet>
<Representation ../>
<Representation ../>
</AdaptationSet>
```

TS/PES Depacketizer

MPD_bytes

DASH Time, period ID

MPEG-2 Video ES

AC-3 Audio ES

DASH Time

DASH Media Segment

Media CDN

HTTP Access Engine

Decoder → Video

Decoder → Audio

<div align="center">

**INTERNATIONAL SEARCH REPORT**

</div>

| International application No. |
|---|
| **PCT/KR2014/003272** |

| A. CLASSIFICATION OF SUBJECT MATTER |
|---|
| ***H04N 21/43(2011.01)i, H04N 21/40(2011.01)i*** |
| According to International Patent Classification (IPC) or to both national classification and IPC |

| B. FIELDS SEARCHED |
|---|
| Minimum documentation searched (classification system followed by classification symbols) |
| H04N 21/43; H04N 21/234; H04N 5/91; H04N 21/23; H04N 5/44; H04N 21/238; H04N 21/2381; H04N 13/04; H04N 21/40 |
| Documentation searched other than minimum documentation to the extent that such documents are included in the fields searched Korean Utility models and applications for Utility models: IPC as above Japanese Utility models and applications for Utility models: IPC as above |
| Electronic data base consulted during the international search (name of data base and, where practicable, search terms used) eKOMPASS (KIPO internal) & Keywords: media contents playing information, contents, recycling, broadcasting network, broadcasting contents, IP network, media contents |

### C. DOCUMENTS CONSIDERED TO BE RELEVANT

| Category* | Citation of document, with indication, where appropriate, of the relevant passages | Relevant to claim No. |
|---|---|---|
| X | WO 2012-099359 A2 (SAMSUNG ELECTRONICS CO., LTD.) 26 July 2012 See paragraphs 57-79, 86-98, 100-110, 125-128, 147-169, 172-175; and figures 2, 3, 5, 6, 10, 11, 14, 15, 17, 27, 28, 30, 31. | 1,8,12,15,20 |
| Y | | 2-4,6,13,14,16-18 |
| A | | 5,7,9-11,19 |
| Y | KR 10-2012-0083747 A (SAMSUNG ELECTRONICS CO., LTD. et al.) 26 July 2012 See paragraphs 24-47, 55-70; figure 2; and tables 1-3. | 2-4,6,14,16-18 |
| Y | WO 2012-060581 A2 (LG ELECTRONICS INC.) 10 May 2012 See paragraphs 171-230; and figures 16-19. | 13 |
| A | WO 2012-011724 A2 (LG ELECTRONICS INC.) 26 January 2012 See paragraphs 93-101, 162-164, 207-212; and figures 7, 15, 18, 19. | 1-20 |
| A | WO 2013-012228 A2 (SAMSUNG ELECTRONICS CO., LTD.) 24 January 2013 See paragraphs 65-77; and figures 5-8. | 1-20 |

| ☐ Further documents are listed in the continuation of Box C. | ☒ See patent family annex. |
|---|---|

\*     Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| 12 AUGUST 2014 (12.08.2014) | **13 AUGUST 2014 (13.08.2014)** |

| Name and mailing address of the ISA/KR | Authorized officer |
|---|---|
| Korean Intellectual Property Office Government Complex-Daejeon, 189 Seonsa-ro, Daejeon 302-701, Republic of Korea Facsimile No. 82-42-472-7140 | Telephone No. |

Form PCT/ISA/210 (second sheet) (July 2009)

International application No.

**PCT/KR2014/003272**

| Patent document cited in search report | Publication date | Patent family member | Publication date |
|---|---|---|---|
| WO 2012-099359 A2 | 26/07/2012 | CN 103329551 A | 25/09/2013 |
| | | EP 2645727 A2 | 02/10/2013 |
| | | KR 10-2012-0084252 A | 27/07/2012 |
| | | US 2013-0293677 A1 | 07/11/2013 |
| | | WO 2012-099359 A3 | 06/12/2012 |
| KR 10-2012-0083747 A | 26/07/2012 | JP 2014-508448 A | 03/04/2014 |
| | | US 2013-0291040 A1 | 31/10/2013 |
| | | WO 2012-099399 A2 | 26/07/2012 |
| | | WO 2012-099399 A3 | 22/11/2012 |
| WO 2012-060581 A2 | 10/05/2012 | CA 2816621 A1 | 10/05/2012 |
| | | CN 103262556 A | 21/08/2013 |
| | | EP 2637414 A2 | 11/09/2013 |
| | | KR 10-2013-0076884 A | 08/07/2013 |
| | | US 2013-0238758 A1 | 12/09/2013 |
| | | WO 2012-060581 A3 | 19/07/2012 |
| WO 2012-011724 A2 | 26/01/2012 | CN 103109540 A | 15/05/2013 |
| | | EP 2597870 A2 | 29/05/2013 |
| | | EP 2597870 A4 | 22/01/2014 |
| | | KR 10-2013-0050953 A | 16/05/2013 |
| | | KR 10-2014-0008478 A | 21/01/2014 |
| | | US 2013-125187 A1 | 16/05/2013 |
| | | WO 2012-011724 A3 | 03/05/2012 |
| WO 2013-012228 A2 | 24/01/2013 | WO 2013-012228 A3 | 14/03/2013 |

Form PCT/ISA/210 (patent family annex) (July 2009)